# EUROPEAN PATENT APPLICATION

(11) **EP 4 815 139 A1**
(43) Date of publication of application: **30.09.2026**
(21) Application number: 23959277.7
(22) Date of filing: 24.11.2023
(51) Int. Cl.: H01M 50/242, H01M 50/204, H01M 50/289

(54) **BATTERY MODULE, BATTERY PACK, AND ELECTRICAL DEVICE**

(71) Applicant: Xiamen Ampack Technology Limited, Xiamen City, Fujian Province, 361000 (CN)
(72) Inventor: LI, Kunlong, Xiamen, Fujian 361000 (CN); WANG, Pengfei, Xiamen, Fujian 361000 (CN); NONG, Wenbin, Xiamen, Fujian 361000 (CN); JIN, Aizhen, Xiamen, Fujian 361000 (CN)
(74) Representative: Kraus & Lederer PartGmbB
(86) International application number: PCT/CN2023/134093
(87) International publication number: WO 2025/107308

(57) **Abstract**

The present application discloses a battery module, a battery pack, and an electric device. The battery module includes a housing, a battery cell assembly, and an elastic member. The housing is provided with a first space and a first opening. The battery cell assembly is disposed in the first space. The elastic member is disposed in the first space. The elastic member and the battery cell assembly are arranged along a first direction. The elastic member includes a base portion, a buffer portion, and a connection portion. The base portion is connected to the battery cell assembly, the buffer portion connects the connection portion and the base portion, and the elastic member is fixed to the housing. In a second direction, the connection portion includes a first extension portion extending beyond the base portion; and the first direction is perpendicular to the second direction. In the present application, the elastic member is fixed to the housing. After the battery module is disassembled, the battery cell assembly and the elastic member are still disposed in the first space, and the elastic member can still apply pressure to the battery cell assembly, which helps to reduce the situation of installation difficulties caused by reinstalling the battery cell assembly and the elastic member, facilitates overhauling and maintenance, and reduces influence on the continued use of the battery module.

## Description

### TECHNICAL FIELD

The present application relates to the field of energy storage technology, in particular to a battery module, a battery pack, and an electric device.

### BACKGROUND

At present, battery modules are widely used in fields such as drones, electric vehicles, and intelligent energy storage devices. In order to prolong the service life of a battery module, battery cells are usually in a pressurized state within a housing. When the battery module is reset after overhauling, a situation that the battery module is difficult to install is likely to occur, which affects the use of the battery module.

### SUMMARY

In view of this, it is necessary to provide a battery module, a battery pack, and an electric device, which facilitate maintenance and reduce influence on the continued use of the battery module.

Some embodiments of the present application provide a battery module, including a housing, a battery cell assembly, and an elastic member. The housing is provided with a first space and a first opening. The battery cell assembly is disposed in the first space. The elastic member is disposed in the first space. The elastic member and the battery cell assembly are arranged along a first direction. The elastic member includes a base portion, a buffer portion, and a connection portion. The base portion is connected to the battery cell assembly, the buffer portion connects the connection portion and the base portion, and the elastic member is fixed to the housing. In a second direction, the connection portion includes a first extension portion extending beyond the base portion; and the first direction is perpendicular to the second direction. In the present application, the elastic member is fixed to the housing. After the battery module is disassembled, the battery cell assembly and the elastic member are still disposed in the first space, and the elastic member can still apply pressure to the battery cell assembly, which helps to reduce the situation of installation difficulties caused by reinstalling the battery cell assembly and the elastic member, facilitates overhauling and maintenance, and reduces influence on the continued use of the battery module.

In the above one or more optional embodiments, the housing is configured to restrict movement of the elastic member along a direction opposite to the first direction, which is beneficial for the elastic member to apply pressure to the battery cell assembly, further making the battery cell assembly and the elastic member relatively stably disposed in the first space, thereby reducing the situation where the battery cell assembly and the elastic member are detached from the first space during overhauling of the battery module.

In the above one or more optional embodiments, the housing includes a rear wall, and the elastic member, the battery cell assembly, and the rear wall are arranged along the first direction. A stiffness of the elastic member is less than a stiffness of the rear wall, so that when the battery cell assembly swells, the elastic member is compressed, reducing the risk of deformation of the rear wall due to squeezing by the battery cell assembly.

In the above one or more optional embodiments, the connection portion includes a first connection portion, and the first connection portion is fixed to the housing. The first extension portion is connected to the first connection portion. When the housing is subjected to a force, through the first extension portion, the connection portion can buffer the force, reducing the impact on the battery cell assembly, thereby helping to enhance the protection for the battery cell assembly.

In the above one or more optional embodiments, the connection portion includes a second connection portion, the first connection portion and the second connection portion are arranged along a third direction, and the first direction, the second direction, and the third direction are perpendicular to each other. The second connection portion is fixed to the housing.

In the above one or more optional embodiments, in the second direction, the connection portion includes a second extension portion extending beyond the base portion, and the first connection portion connects the first extension portion and the second extension portion. When viewed along the first direction, in the second direction, the first extension portion and the second extension portion are respectively located on two sides of the base portion. When the housing is subjected to a force, through the first extension portion and the second extension portion, the connection portion can buffer the force, further reducing the impact on the battery cell assembly, thereby further helping to enhance the protection for the battery cell assembly.

In the above one or more optional embodiments, the housing includes a first fixing portion and a second fixing portion. The first extension portion is fixed to the first fixing portion, and the second extension portion is fixed to the second fixing portion.

In the above one or more optional embodiments, the housing includes a first side wall and a second side wall arranged along the second direction, the first fixing portion is disposed on the first side wall, and the second fixing portion is disposed on the second side wall.

In the above one or more optional embodiments, in the second direction, the connection portion includes a third extension portion and a fourth extension portion extending beyond the base portion, the third extension portion is fixed to the first fixing portion, and the fourth extension portion is fixed to the second fixing portion. The second connection portion connects the third extension portion and the fourth extension portion.

In the above one or more optional embodiments, along the first direction, a part of a projection of the first extension portion is spaced apart from a projection of the first fixing portion, which facilitates deformation of the first extension portion.

In the above one or more optional embodiments, along the first direction, a part of a projection of the second extension portion is spaced apart from a projection of the second fixing portion, which facilitates deformation of the second extension portion.

In the above one or more optional embodiments, along the first direction, a part of a projection of the third extension portion is spaced apart from the projection of the first fixing portion, which facilitates deformation of the third extension portion.

In the above one or more optional embodiments, along the first direction, a part of a projection of the fourth extension portion is spaced apart from the projection of the second fixing portion, which facilitates deformation of the fourth extension portion.

In the above one or more optional embodiments, along the first direction, the projection of the first extension portion is spaced apart from a projection of the main body portion, which facilitates deformation of the first extension portion.

In the above one or more optional embodiments, along the first direction, the projection of the second extension portion is spaced apart from the projection of the main body portion, which facilitates deformation of the second extension portion.

In the above one or more optional embodiments, along the first direction, the projection of the third extension portion is spaced apart from the projection of the main body portion, which facilitates deformation of the third extension portion.

In the above one or more optional embodiments, along the first direction, the projection of the fourth extension portion is spaced apart from the projection of the main body portion, which facilitates deformation of the fourth extension portion.

In the above one or more optional embodiments, the buffer portion includes a first buffer portion, and the first buffer portion connects the first connection portion and the base portion. The first buffer portion includes a first segment and a second segment, the first segment is connected to the base portion, the second segment includes a first sub-segment and at least one second sub-segment, the first sub-segment connects the first segment and the first connection portion, and the second sub-segment is connected to the first extension portion and/or the second extension portion. In the second direction, the second sub-segment is disposed on one side of the first sub-segment. The second sub-segment can enhance the strength of the elastic member.

In the above one or more optional embodiments, a length w2 of the second sub-segment is less than a length w1 of the first sub-segment. Reducing the length of the second sub-segment can facilitate bending of the first extension portion and the second extension portion while enhancing the strength of the elastic member.

In the above one or more optional embodiments, when viewed along the second direction, along the third direction, the first connection portion extends beyond the first buffer portion, which facilitates deformation of the first buffer portion.

In the above one or more optional embodiments, along the third direction, a length of a projection of the first sub-segment in the first direction is D1, and a length of a projection of the second sub-segment in the first direction is D2, where D1 is greater than D2, which helps to provide a pressurization force to the battery cell assembly.

In the above one or more optional embodiments, the buffer portion includes a second buffer portion, and along the third direction, the first buffer portion and the second buffer portion are oppositely disposed. The second buffer portion connects the second connection portion and the base portion.

In the above one or more optional embodiments, the second buffer portion includes a third segment and a fourth segment, the third segment is connected to the base portion, the fourth segment includes a third sub-segment and at least one fourth sub-segment, the third sub-segment connects the third segment and the second connection portion, and the fourth sub-segment is connected to the third extension portion and/or the fourth extension portion. In the second direction, the fourth sub-segment is disposed on one side of the third sub-segment. The fourth sub-segment can enhance the strength of the elastic member.

In the above one or more optional embodiments, a length w4 of the fourth sub-segment is less than a length w3 of the third sub-segment. Reducing the length of the fourth sub-segment can facilitate bending of the third extension portion and the fourth extension portion while enhancing the strength of the elastic member.

In the above one or more optional embodiments, when viewed along the second direction, along a direction opposite to the third direction, the second connection portion extends beyond the second buffer portion, which facilitates deformation of the second buffer portion.

In the above one or more optional embodiments, along the direction opposite to the third direction, a length of a projection of the third sub-segment in the first direction is D3, and a length of a projection of the fourth sub-segment in the first direction is D4, where D3 is greater than D4, which helps to provide a pressurization force to the battery cell assembly.

In the above one or more optional embodiments, along the second direction, a first gap is between the base portion and the housing. The battery module includes a first conductive member, the first conductive member is connected to the battery cell assembly, and the first conductive member passes through the first gap.

In the above one or more optional embodiments, along the second direction, a second gap is between the base portion and the housing. The battery module includes a second conductive member, the second conductive member is connected to the battery cell assembly, and the second conductive member passes through the second gap.

In the above one or more optional embodiments, the housing includes a first top wall, and the first top wall connects the first side wall and the second side wall. A third fixing portion is provided on the first top wall, the third fixing portion is fixed to the first connection portion, and along the first direction, a projection of the third fixing portion overlaps with a projection of the first connection portion, transferring a force received by the buffer portion to the housing.

In the above one or more optional embodiments, the housing includes a first bottom wall, the first top wall and the first bottom wall are arranged along the third direction, and the first bottom wall connects the first side wall and the second side wall. A fourth fixing portion is provided on the first bottom wall, the fourth fixing portion is fixed to the second connection portion, and along the first direction, a projection of the fourth fixing portion overlaps with a projection of the second connection portion, transferring a force received by the buffer portion to the housing.

In the above one or more optional embodiments, the battery cell assembly includes a battery cell unit, the battery cell unit includes a battery cell, the battery cell includes a battery cell housing, an electrode assembly, and an electrode terminal, the battery cell housing includes a main body portion, the electrode assembly is disposed in the main body portion, and the electrode terminal is connected to the electrode assembly and extends out of the battery cell housing. The first top wall is provided with two first limiting portions, and the two first limiting portions are arranged along the second direction. The main body portion of each battery cell unit is disposed between the two first limiting portions. Movement of the battery cell assembly is guided by two first limiting members.

In the above one or more optional embodiments, the first bottom wall is provided with two second limiting portions, and the two second limiting portions are arranged along the second direction. The main body portion of each battery cell unit is disposed between the two second limiting portions. Movement of the battery cell assembly is guided by two second limiting members.

In the above one or more optional embodiments, the battery module includes a first insulating sheet, and the first insulating sheet is disposed between the first bottom wall and the battery cell assembly, enhancing the insulation between the battery cell assembly and the first bottom wall.

In the above one or more optional embodiments, a friction coefficient between the battery cell unit and the first insulating sheet is less than a friction coefficient between the battery cell unit and the first insulating sheet, which facilitates the movement of the battery cell unit.

In the above one or more optional embodiments, the battery module includes a first buffer member, the first buffer member is disposed between the base portion and a first battery cell unit, and a hardness of the first buffer member is less than a hardness of the base portion, reducing damage to the first battery cell unit by the base portion.

In the above one or more optional embodiments, the battery module includes a second buffer member, the second buffer member is disposed between a second battery cell unit and a right wall, and a hardness of the second buffer member is less than a hardness of the right wall, reducing damage to the second battery cell unit by the right wall.

In the above one or more optional embodiments, along the first direction, the projection of the main body portion is located within a projection of the base portion, which can increase an acting area between the base portion and the main body portion, and is beneficial for the base portion to apply pressure to the main body portion.

In the above one or more optional embodiments, the first conductive member is configured to be movable with the elastic member, which can reduce pulling on the first conductive member, reducing the risk of the first conductive member being pulled apart, thereby improving the safety of the battery module 100.

In the above one or more optional embodiments, the second conductive member and the elastic member are separately disposed, which helps to reduce pulling on the second conductive member, reducing the risk of the second conductive member being pulled apart, thereby improving the safety of the battery module.

In the above one or more optional embodiments, the connection portion is provided with a flange, and the flange is formed by folding the connection portion on one side of the buffer portion in the third direction. Along the first direction, the flange is disposed between the connection portion and the base portion. The flange can reduce the risk of the connection portion cutting the first conductive member and the second conductive member.

In the above one or more optional embodiments, along the first direction, a projection of the flange does not overlap with a projection of the buffer portion, reducing influence on a deformation region of the buffer portion.

Some embodiments of the present application provide a battery pack, including a front cover and the battery module in any of the above embodiments, where the front cover is detachably connected to the battery module and closes the first opening, facilitating overhauling of the battery pack.

In the above one or more optional embodiments, the front cover is detachably connected to the housing, facilitating overhauling and replacement of the battery module.

In the above one or more optional embodiments, along the second direction, a projection of the front cover is spaced apart from a projection of the elastic member, which helps to reduce the situation of installation difficulties caused by reinstalling the battery cell assembly and the elastic member, facilitates overhauling and maintenance, and reduces influence on the continued use of the battery module.

In the above one or more optional embodiments, the front cover is provided with a second space. The battery module includes a circuit board, the circuit board is disposed in the second space, and the circuit board is connected to the battery cell assembly, facilitating overhauling of the circuit board after the housing and the front cover are disassembled.

Some embodiments of the present application provide an electric device, including at least one battery pack in any of the above embodiments.

### BRIEF DESCRIPTION OF DRAWINGS

FIG. 1 is a schematic structural diagram of a battery module according to some embodiments.
FIG. 2 is a schematic partial structural diagram of a battery module according to some embodiments.
FIG. 3 is a schematic partial structural diagram of a battery module according to some embodiments.
FIG. 4 is a schematic partial structural diagram of the battery module in FIG. 3 from another perspective.
FIG. 5 is a schematic partial structural diagram of a battery module according to some embodiments.
FIG. 6 is a schematic structural diagram of a first top wall according to some embodiments.
FIG. 7 is a schematic structural diagram of a top wall from another perspective according to some embodiments.

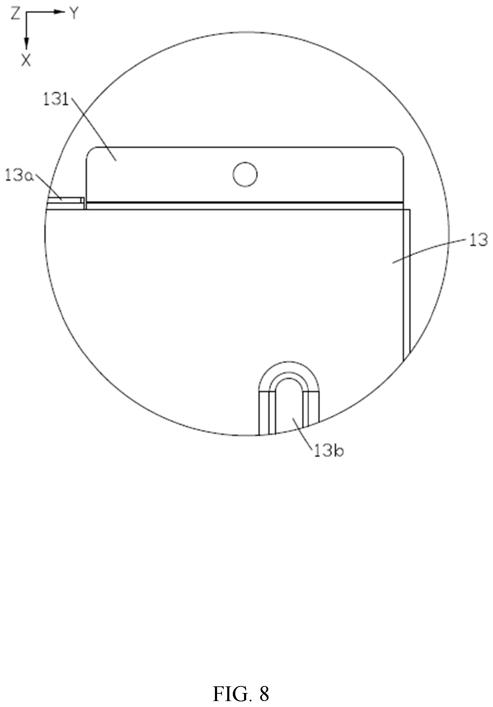

FIG. 8 is a schematic enlarged view of a partial top wall in FIG. 7.
FIG. 9 is a schematic structural diagram of a partial housing according to some embodiments.

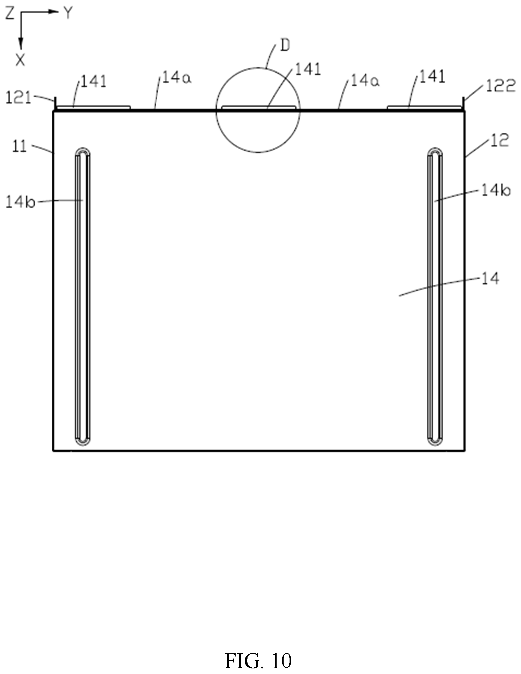

FIG. 10 is a schematic structural diagram of a bottom wall according to some embodiments.

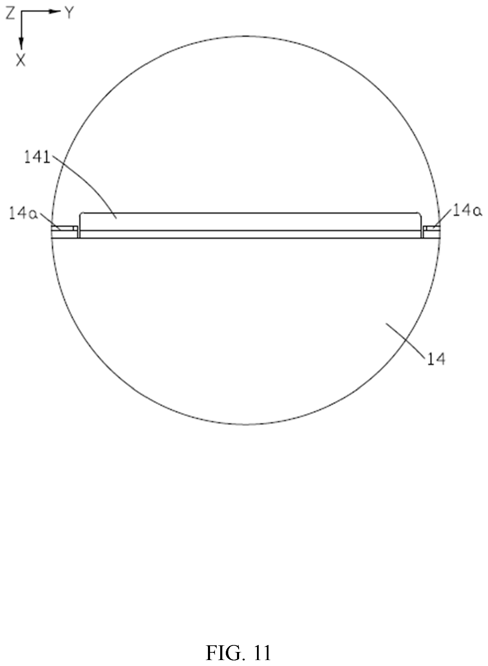

FIG. 11 is a schematic enlarged view of a partial bottom wall in FIG. 10.
FIG. 12 is a schematic structural diagram of an elastic member according to some embodiments.
FIG. 13 is a schematic structural diagram of an elastic member from another perspective according to some embodiments.
FIG. 14 is a schematic structural diagram of an elastic member from still another perspective according to some embodiments.
FIG. 15 is a schematic structural diagram of an elastic member according to some other embodiments.
FIG. 16 is a schematic structural diagram of an elastic member according to still some other embodiments.
FIG. 17 is a schematic structural diagram of an elastic member according to yet some other embodiments.
FIG. 18 is a schematic structural diagram of an elastic member according to further some other embodiments.
FIG. 19 is a schematic structural diagram of an elastic member from yet another perspective according to some embodiments.
FIG. 20 is a brief schematic diagram of a projection of an elastic member along a third direction Z according to some embodiments.
FIG. 21 is a brief schematic diagram of a projection of an elastic member along a direction opposite to a third direction Z according to some embodiments.
FIG. 22 is a schematic structural diagram of a partial battery module according to some embodiments.
FIG. 23 is a schematic structural diagram of a battery cell according to some embodiments.
FIG. 24 is a schematic exploded view of the battery cell in FIG. 21.
FIG. 25 is a schematic structural diagram of a battery cell unit according to some embodiments.
FIG. 26 is a schematic structural diagram of a battery cell unit from another perspective according to some embodiments.
FIG. 27 is a schematic structural diagram of a battery cell unit from still another perspective according to some embodiments.
FIG. 28 is a schematic structural diagram of a partial battery cell unit according to some embodiments.
FIG. 29 is a schematic structural diagram of a partial battery cell unit according to some embodiments.
FIG. 30 is a schematic structural diagram of a battery cell unit from yet another perspective according to some embodiments.
FIG. 31 is a schematic structural diagram of a battery pack according to some embodiments.
FIG. 32 is a schematic exploded view of a battery pack according to some embodiments.
FIG. 33 is a schematic structural diagram of a front cover according to some embodiments.
FIG. 34 is a schematic cross-sectional view of a battery pack according to some embodiments.
FIG. 35 is a schematic enlarged view of a partial structure of a battery module in FIG. 32.
FIG. 36 is a schematic enlarged view of a partial structure of the battery module in FIG. 32.
FIG. 37 is a schematic structural diagram of an electric device according to some embodiments.

Description of reference signs of main components:
100 .Battery module;10 .Housing ;101a .First space ;101b .First opening ;11 .First side wall ; 11a .First fixing portion ;112 .First fixing member ;12 .Second side wall ;12a .Second fixing portion ; 122 .Second fixing member ;13 .First top wall ;131 .Third connection portion ;13a .Third fixing portion ;13b .First limiting member ;14 .First bottom wall ;141 .Fourth connection portion ; 14a .Fourth fixing portion ;14b .Second limiting member ;15 .Rear wall ;20 .Battery cell assembly ; 20a .Battery cell unit ;201 .First battery cell unit ;202 .Second battery cell unit ;21 .Battery cell ; 21a .Battery cell housing ;211 .Main body portion ;211c .First wall ;211d .Second wall ;2111 .First housing ;2111a .First recess ;2112 .Second housing ;2112a .Second recess ;2113 .First extension edge ;2114 .Second extension edge ;212 .Sealing portion ;212a .First sealing portion ;2121 .First sealing connection portion ;2122 .First bent portion ;212b .Second sealing portion ;21b .Electrode assembly ;21c .Electrode terminal ;22 .Support ;22a .First support ;22b .Second support ;221 .First portion ;222 .First side portion ;224 .First side extension portion ;226 .Second portion ;30 .Elastic member ;301 .First gap ;302 .Second gap ;31 .Base portion ;32 .Buffer portion ;321 .First buffer portion ;321a .First segment ;321b .Second segment ;3211 .First sub-segment ;3212 .Second sub-segment ;322 .Second buffer portion ;322a .Third segment ;322b .Fourth segment ;3221 .Third sub-segment ;3222 .Fourth sub-segment ;33 .Connection portion ;33a .First connection portion ; 331 .First extension portion ;332 .Second extension portion ;33b .Second connection portion ; 333 .Third extension portion ;334 .Fourth extension portion ;33c .Flange ;40 .First conductive member ;50 .Second conductive member ;60 .Sampling member ;100a .Fastener ;101 .First insulating sheet ;102 .First buffer member ;103 .Second buffer member ;104 .Wire ;200 .Battery pack ;10b .Front cover ;101c .Second space ;110 .Third side wall ;120 .Fourth side wall ; 130 .Second top wall ;140 .Second bottom wall ;150 .Front wall ;203 .Circuit board ;200a .First connection end ;200b .Second connection end ;300 .Electric device_{∘}

The present application is further described using the following specific embodiments in conjunction with the above drawings.

### DETAILED DESCRIPTION

The technical solutions in some embodiments of the present application are described below in conjunction with the drawings in some embodiments of the present application. Obviously, the described embodiments are only some embodiments rather than all embodiments of the present application.

It should be noted that when an element is considered to be "connected" to another element, it can be directly connected to the another element or there may be an element disposed therebetween. When an element is considered to be "disposed" or "arranged" at another element, it can be directly disposed on the another element or there may be an element disposed therebetween.

Unless otherwise defined, all technical and scientific terms used herein have the same meanings as commonly understood by those skilled in the technical field of the present application. The terms used in the specification of the present application are only for the purpose of describing specific embodiments, and are not intended to limit the present application. The term "and/or" used herein includes any and all combinations of one or more of the associated listed items.

It should be understood that, considering factors of actual processing tolerances, the term "perpendicular" in the technical solutions of the present application is used to describe an ideal state between two components. During actual production or use, two components may be in an approximately perpendicular state. For example, in combination with numerical description, perpendicular may represent that an angle range between two straight lines is 90°±10°, perpendicular may also refer to a dihedral angle range between two planes of 90°±10°, and perpendicular may also represent that an angle range between a straight line and a plane is 90°±10°. Two components described as "perpendicular" may not be absolute straight lines or planes, and may also be roughly straight lines or planes. From a macroscopic perspective, as long as an overall extension direction is a straight line or plane, the component can be considered as a "straight line" or "plane".

Unless otherwise defined, all technical and scientific terms used herein have the same meanings as commonly understood by those skilled in the technical field of the present application. The terms used in the specification of the present application are only for the purpose of describing specific embodiments, and are not intended to limit the present application.

The terms "left", "right", "top", "bottom", "front", "rear", and similar expressions used herein are only for description purposes and are not intended to limit the present application.

Unless otherwise defined, the term " a plurality of " used herein, when used to describe the number of components, specifically represent that the number of the components is two or more.

In a first direction X includes a direction along the first direction X and a direction opposite to the first direction X. In a second direction Y includes a direction along the second direction Y and a direction opposite to the second direction Y. In a third direction Z includes a direction along the third direction Z and a direction opposite to the third direction Z.

For convenience of description, in the drawings, some electrode terminals are not shown in a bent state.

Some embodiments of the present application provide a battery module, including a housing, a battery cell assembly, and an elastic member. The housing is provided with a first space and a first opening. The battery cell assembly is disposed in the first space. The elastic member is disposed in the first space. The elastic member and the battery cell assembly are arranged along a first direction. The elastic member includes a base portion, a buffer portion, and a connection portion. The base portion is connected to the battery cell assembly, the buffer portion connects the connection portion and the base portion, and the elastic member is fixed to the housing. In a second direction, the connection portion includes a first extension portion extending beyond the base portion; and the first direction is perpendicular to the second direction. In the present application, the elastic member is fixed to the housing. After the battery module is disassembled, the battery cell assembly and the elastic member are still disposed in the first space, and the elastic member can still apply pressure to the battery cell assembly, which helps to reduce the situation of installation difficulties caused by reinstalling the battery cell assembly and the elastic member, facilitates overhauling and maintenance, and reduces influence on the continued use of the battery module.

Some embodiments of the present application are described in detail in conjunction with the drawings. Without conflict, the following embodiments and features in these embodiments can be combined with each other.

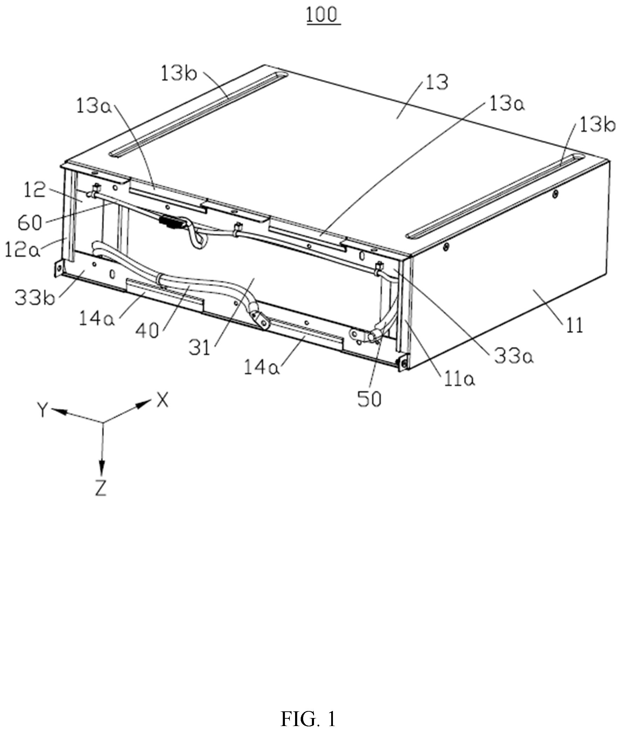

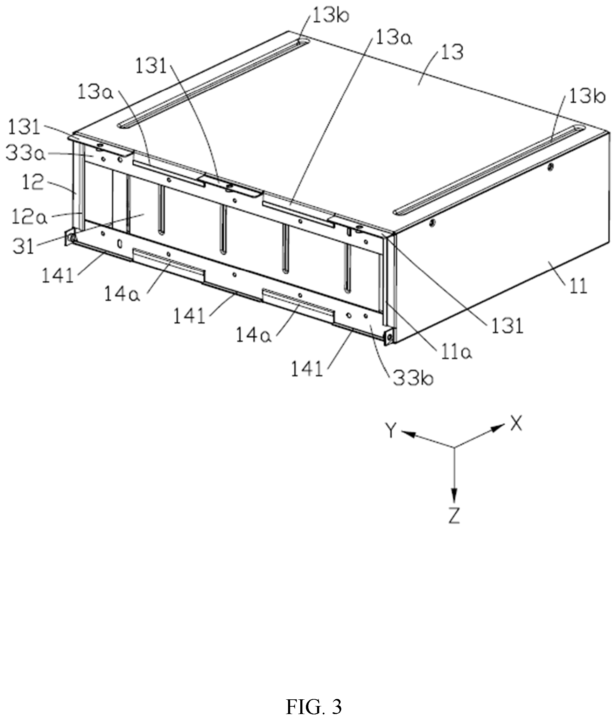

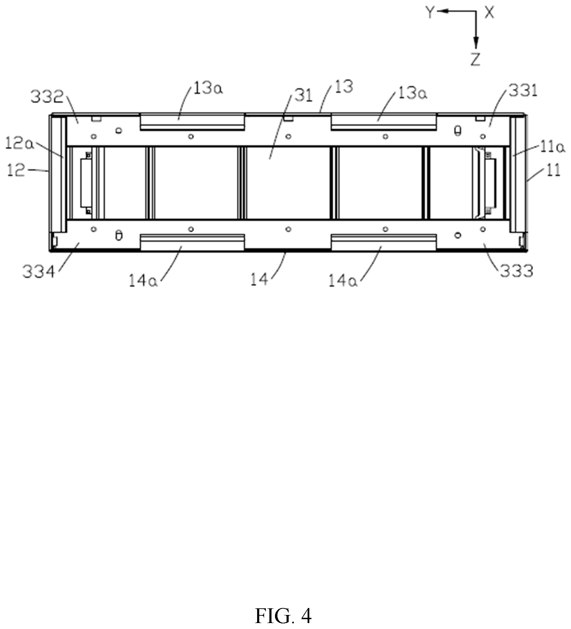

Referring to FIGs. 1 to 5, an embodiment of the present application provides a battery module 100, including a housing 10 and a battery cell assembly 20, where the housing 10 is provided with a first space 101a and a first opening 101b. The battery cell assembly 20 is disposed in the first space 101a.

In some embodiments, the battery module 100 includes an elastic member 30, and the elastic member 30 is disposed in the first space 101a. The elastic member 30 and the battery cell assembly 20 are arranged along a first direction X. The elastic member 30 is configured to apply pressure to the battery cell assembly 20 and provide swelling space for the battery cell assembly 20.

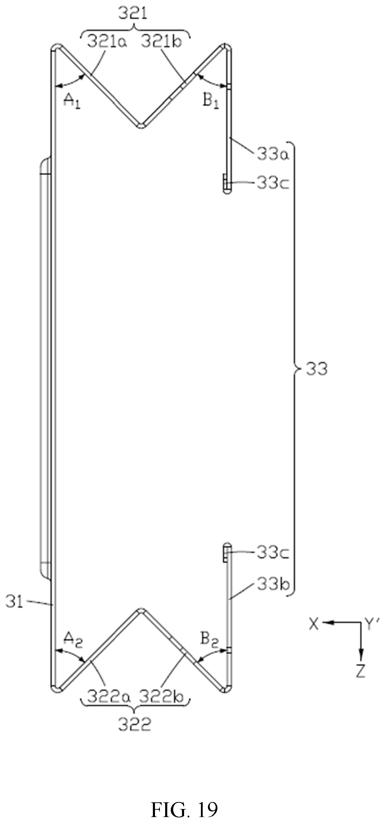

Further referring to FIG. 19, in some embodiments, the elastic member 30 includes a base portion 31, and the base portion 31 is connected to the battery cell assembly 20. The base portion 31 is configured to apply pressure to the battery cell assembly 20.

In some embodiments, the elastic member 30 includes a buffer portion 32, the buffer portion 32 is connected to the base portion 31, and the buffer portion 32 is configured to provide swelling space for the battery cell assembly 20.

In some embodiments, the elastic member 30 includes a connection portion 33, and the buffer portion 32 connects the connection portion 33 and the base portion 31.

Referring to FIGs. 1 to 5, in some embodiments, the elastic member 30 is fixed to the housing 10. After the battery module 100 is disassembled, the battery cell assembly 20 and the elastic member 30 are still disposed in the first space 101a, and the elastic member 30 can still apply pressure to the battery cell assembly 20, which helps to reduce the situation of installation difficulties caused by reinstalling the battery cell assembly 20 and the elastic member 30, facilitates overhauling and maintenance, and reduces influence on the continued use of the battery module 100.

In some embodiments, fixing includes but is not limited to abutting, bonding, welding, fastening of a fastener, and snap connection.

In some embodiments, the housing 10 is configured to restrict movement of the elastic member 30 in the direction opposite to the first direction X, which is beneficial for the elastic member 30 to apply pressure to the battery cell assembly 20, further making the battery cell assembly 20 and the elastic member 30 relatively stably disposed in the first space 101a, thereby reducing the situation where the battery cell assembly 20 and the elastic member 30 are detached from the first space 101a during overhauling of the battery module 100.

In some embodiments, along the direction opposite to the first direction X, the connection portion 33 abuts against one side of the housing 10, the base portion 31 is connected to the battery cell assembly 20, the battery cell assembly 20 is connected to another side of the housing 10, and through an elastic force of the buffer portion 32, the battery cell assembly 20 and the elastic member 30 are disposed in the first space 101a.

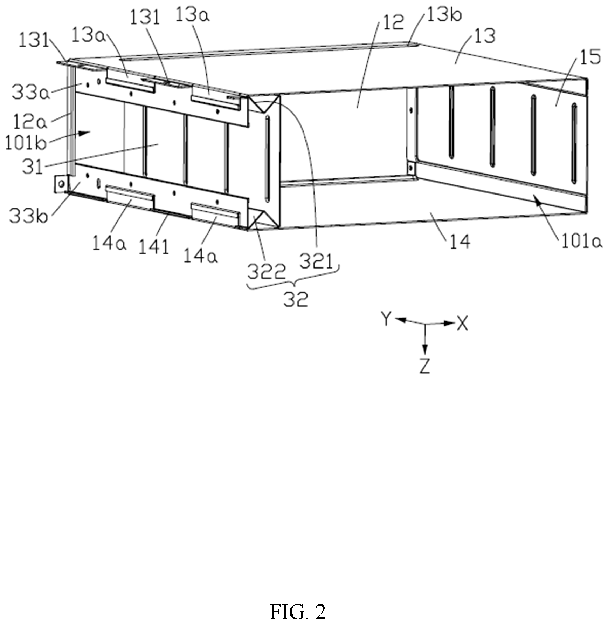

Referring to FIGs. 1 and 2, in some embodiments, the housing 10 includes a first side wall 11 and a second side wall 12, and the first side wall 11 and the second side wall 12 are arranged along a second direction Y. Along the second direction Y, the battery cell assembly 20 is disposed between the first side wall 11 and the second side wall 12. The first direction X is perpendicular to the second direction Y.

In some embodiments, the housing 10 includes a first top wall 13 and a first bottom wall 14, the first top wall 13 and the first bottom wall 14 are arranged along a third direction Z, and the first direction X, the second direction Y, and the third direction Z are perpendicular to each other. The first bottom wall 14 connects the first side wall 11 and the second side wall 12, and the first top wall 13 connects the first side wall 11 and the second side wall 12. Along the third direction Z, the battery cell assembly 20 is disposed between the first bottom wall 14 and the first top wall 13.

In some embodiments, the first bottom wall 14 is configured to bear the battery cell assembly 20.

In some embodiments, the housing 10 includes a rear wall 15, and the rear wall 15 connects the first side wall 11, the second side wall 12, the first bottom wall 14, and the first top wall 13. The elastic member 30, the battery cell assembly 20, and the rear wall 15 are arranged along the first direction X. Along the first direction X, the battery cell assembly 20 is disposed between the elastic member 30 and the rear wall 15.

In some embodiments, a stiffness of the elastic member 30 is less than a stiffness of the rear wall 15, so that when the battery cell assembly 20 swells, the elastic member 30 is compressed, reducing the risk of deformation of the rear wall 15 due to squeezing by the battery cell assembly 20. Stiffness is the ability of a structure to resist elastic deformation when subjected to a force.

In some embodiments, the first side wall 11, the second side wall 12, the first bottom wall 13, the first top wall 14, and the rear wall 15 form the first space 101a and the first opening 101b.

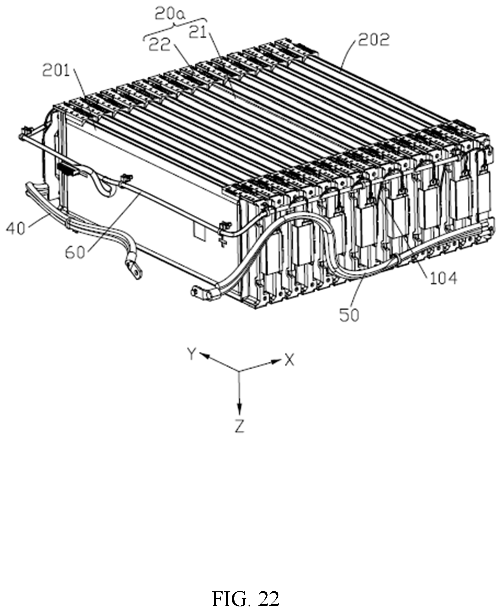

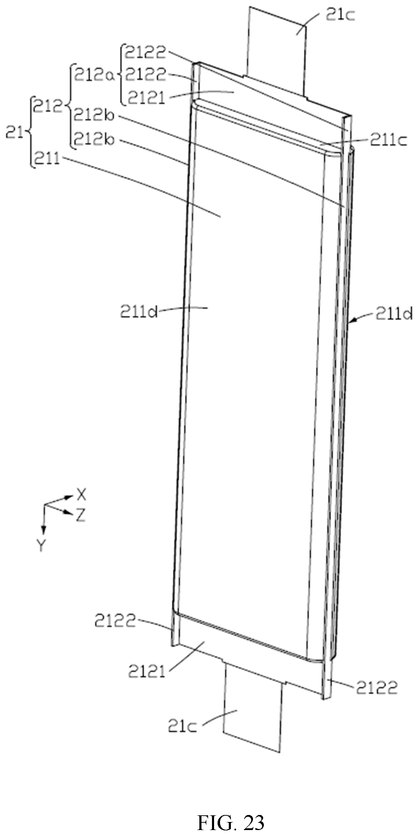

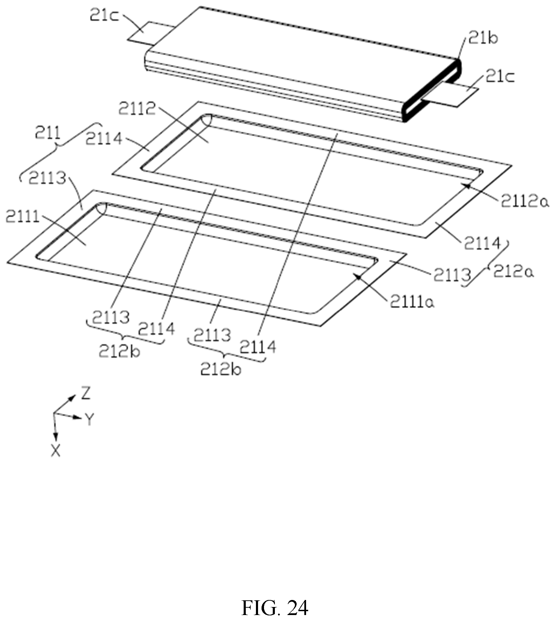

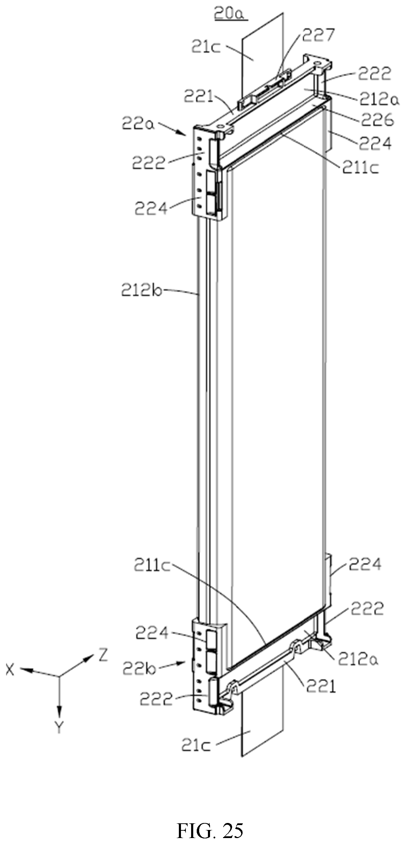

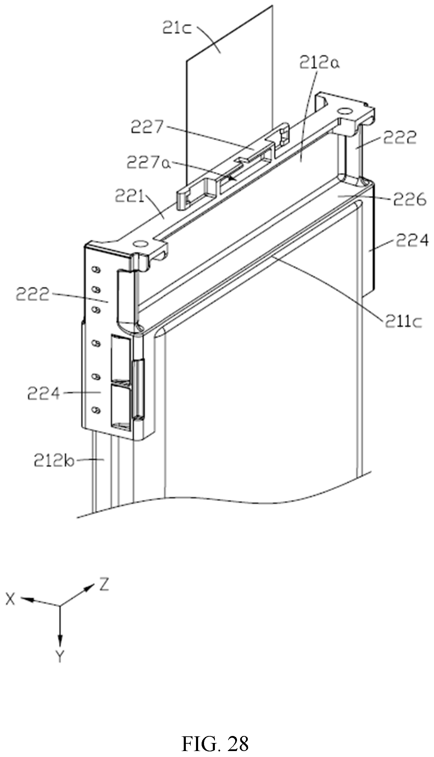

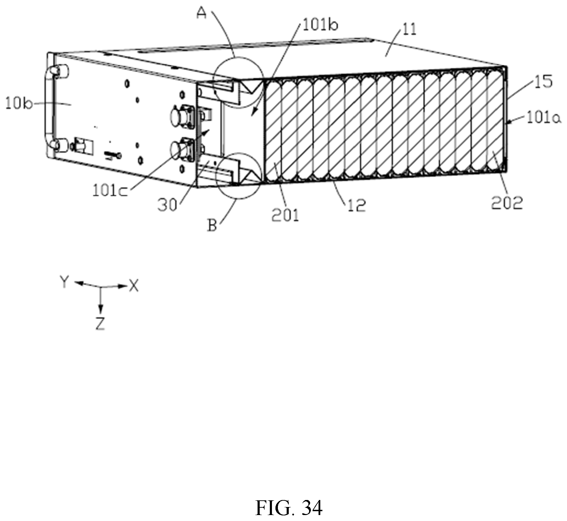

Referring to FIGs. 22 to 30 and FIG. 34, in some embodiments, the battery cell assembly 20 includes a plurality of battery cell units 20a, and the plurality of battery cell units 20a are stacked along the first direction X.

In some embodiments, the battery cell unit 20a includes a first battery cell unit 201 and a second battery cell unit 202, the first battery cell unit 201 and the second battery cell unit 202 are battery cell units located at the outermost side of the battery cell assembly 20, where the first battery cell unit 201 is connected to the base portion 31, and the second battery cell unit 202 is connected to the rear wall 15.

In some embodiments, the battery cell unit 20a includes a battery cell 21. The battery cell 21 includes a battery cell housing 21a, an electrode assembly 21b, and an electrode terminal 21c. The battery cell housing 21a includes a main body portion 211, the electrode assembly 21b is disposed in the main body portion 211, and the electrode terminal 21c is connected to the electrode assembly 21b and extends out of the battery cell housing 21a.

In some embodiments, the battery cell unit 20a is connected to the first bottom wall 14, and the battery cell unit 20a is configured in a manner that when the battery cell 21 swells, the battery cell unit 20a moves relative to the first bottom wall 14 along the direction opposite to the first direction X.

In some embodiments, the battery cell unit 20a is connected to the first bottom wall 14, and the battery cell unit 20a is configured in a manner that when the swelling of the battery cell 21 is alleviated, the battery cell unit 20a moves relative to the first bottom wall 14 along the first direction X.

In some embodiments, the battery module 100 includes a first insulating sheet 101, and the first insulating sheet 101 is disposed between the first bottom wall 14 and the battery cell assembly 20, enhancing insulation between the battery cell assembly 20 and the first bottom wall 14.

In some embodiments, the battery cell assembly 20 and the first insulating sheet 101 are connected, and the battery cell unit 20a is configured in a manner that when the battery cell unit 20a swells, the battery cell unit 20a moves on the first insulating sheet 101 along the direction opposite to the first direction X. For example, the battery cell assembly 20 and the first insulating sheet 101 are in contact connection.

In some embodiments, the battery cell assembly 20 and the first insulating sheet 101 are connected, and the battery cell unit 20a is configured in a manner that when the swelling of the battery cell 21 is alleviated, the battery cell unit 20a moves on the first insulating sheet 101 along the first direction X. For example, the battery cell assembly 20 and the first insulating sheet 101 are in contact connection.

In some embodiments, a friction coefficient between the battery cell unit 20a and the first insulating sheet 101 is less than a friction coefficient between the battery cell unit 20a and the first insulating sheet 101, which facilitates movement of the battery cell unit 20a.

In some embodiments, the battery cell housing 21a includes a sealing portion 212, the sealing portion 212 is connected to the main body portion 211, and the electrode terminal 21c extends out of the battery cell housing 21a from the sealing portion 212.

In some embodiments, the main body portion 211 includes a first housing 2111 and a second housing 2112, the first housing 2111 is provided with a first recess 2111a, and the second housing 2112 is provided with a second recess 2112a. The first housing 2111 is connected to the second housing 2112 to form an accommodating space. A part of the electrode assembly 21b is disposed in the first recess 2111a, and another portion is disposed in the second recess 2112a. A peripheral side of the first housing 2111 extends outward to form a first extension edge 2113, and a peripheral side of the second housing 2112 extends outward to form a second extension edge 2114. After the first housing 2111 is connected to the second housing 2112, the first extension edge 2113 and the second extension edge 2114 overlap and are hermetically connected to form the sealing portion 212.

In some embodiments, the sealing portion 212 includes a first sealing portion 212a, and the electrode terminal 21c extends out of the battery cell housing 21a from the first sealing portion 212a.

In some embodiments, the sealing portion 212 includes a second sealing portion 212b, and the second sealing portion 212b is connected to the first sealing portion 212a.

In some embodiments, the first extension edge 2113 and the second extension edge 2114 overlap and are hermetically connected to form two first sealing portions 212a and two second sealing portions 212b. The two first sealing portions 212a are arranged along the second direction Y, the two second sealing portions 212b are arranged along the third direction Z, one first sealing portion 212a connects the two second sealing portions 212b, and the other first sealing portion 212a connects the two second sealing portions 212b.

In some embodiments, the battery cell 21 includes two electrode terminals 21c, one electrode terminal 21c extends out of the battery cell housing 21a from one of the two first sealing portions 212a, and the other electrode terminal 21c extends out of the battery cell housing 21a from the other of the two first sealing portions 212a.

In some embodiments, the two electrode terminals 21c extend out of the battery cell housing 21a from the same first sealing portion 212a.

In some embodiments, adjacent main body portions 211 are in contact connection, which facilitates pressurization of the main body portion 211.

In some embodiments, adjacent battery cell housings 21a apply pressure to each other, so that the plurality of battery cell units 20a are in a pressurized state, which helps to prolong the service life of the battery cell unit 20a.

In some embodiments, the first sealing portion 212a includes a first sealing connection portion 2121 and two first bent portions 2122, and the first sealing connection portion 2121 connects the two first bent portions 2122. The two first bent portions 2122 are disposed opposite to each along the third direction Z. The electrode terminal 21c extends out of the battery cell housing 21a from the first sealing connection portion 2121.

In some embodiments, the battery cell housing 21a includes an aluminum plastic film.

In some embodiments, the battery cell 21 includes but is not limited to a pouch battery cell, a prismatic battery cell, and a round battery cell.

In some embodiments, each battery cell unit 20a further includes a support 22, and the support 22 covers at least a part of the battery cell housing 21a.

In some embodiments, the support 22 is configured in a manner that when the battery cell 21 swells, the support 22 moves relative to the first bottom wall 14 along the direction opposite to the first direction X.

In some embodiments, the support 22 is connected to the first bottom wall 14, and the support 22 is configured in a manner that when the battery cell 21 swells, the support 22 moves relative to the first bottom wall 14 along the direction opposite to the first direction X.

In some embodiments, the support 22 is connected to the first bottom wall 14, and the support 22 is configured in a manner that when the swelling of the battery cell 21 is alleviated, the support 22 moves relative to the first bottom wall 14 along the first direction X.

In some embodiments, the support 22 in direct contact with the first insulating sheet 101, and the support 22 is configured in a manner that when the battery cell 21 swells, the support 22 moves on the first insulating sheet 101 along the direction opposite to the first direction X.

In some embodiments, the support 22 in direct contact with the first insulating sheet 101, and the support 22 is configured in a manner that when the swelling of the battery cell 21 is alleviated, the support 22 moves on the first insulating sheet 101 along the first direction X.

In some embodiments, the support 22 is integrally formed on the battery cell 21, which can enhance the connection strength between the support 22 and the battery cell 21. Integral formation means that the support 22 and the battery cell 21 are directly fixed. An integral formation method includes but is not limited to a pouring process and an injection molding process.

In some embodiments, after an insulating material is disposed around the battery cell 21 through a pouring process, the insulating material is cured to form the support 22, and the support 22 and the battery cell 21 are bonded and fixed. For example, the battery cell 21 is placed into a mold, the insulating material is poured into the mold, the insulating material is cured to form the support 22, and the support 22 and the battery cell 21 are bonded and fixed, and then the support 22 and the battery cell 21 are taken out of the mold.

In some embodiments, the insulating material includes but is not limited to a pouring adhesive and a foaming adhesive.

In some embodiments, the injection molding process includes: the battery cell 21 is placed into a mold, an injection molding device is used to heat and melt the insulating material, the molten insulating material flows into the mold, the insulating material is cured to form the support 22, the support 22 and the battery cell 21 are bonded and fixed, and then the support 22 and the battery cell 21 are taken out of the mold. Optionally, the insulating material includes polyamide.

In some embodiments, the support 22 is an insulating support, which can reduce the risk of short circuit between the support 22 and the battery cell 21.

In some embodiments, the support 22 includes a first support 22a, and the first support 22a covers at least a part of the sealing portion 212.

In some embodiments, the first support 22a includes at least one first side portion 222, and each first side portion 222 covers one first bent portion 2122. The first support 22a covering a part of the first sealing portion 212a enhances the protection for the first sealing portion 212a.

In some embodiments, the first side portion 222 is connected to the first bottom wall 14, and the first side portion 222 is configured in a manner that when the battery cell 21 swells, the first side portion 222 moves relative to the first bottom wall 14 along the direction opposite to the first direction X.

In some embodiments, the first side portion 222 is connected to the first bottom wall 14, and the first side portion 222 is configured in a manner that when the swelling of the battery cell 21 is alleviated, the first side portion 222 moves relative to the first bottom wall 14 along the first direction X.

In some embodiments, the first side portion 222 is connected to the first insulating sheet 101, and the first side portion 222 is configured in a manner that when the battery cell 21 swells, the first side portion 222 moves relative to the first insulating sheet 101 along the direction opposite to the first direction X. For example, the first side portion 222 is in direct contact with the first insulating sheet 101.

In some embodiments, the first side portion 222 is connected to the first insulating sheet 101, and the first side portion 222 is configured in a manner that when the swelling of the battery cell 21 is alleviated, the first side portion 222 moves on the first insulating sheet 101 along the first direction X. For example, the first side portion 222 in direct contact with the first insulating sheet 101.

In some embodiments, the first support 22a includes two first side portions 222, and the first side portions 222 are arranged along the third direction Z. One of the first side portions 222 is connected to the first insulating sheet 101.

When the battery cell 21 swells, the first sealing portion 212a can move on the first insulating sheet 101 through the first side portion 222, and through the first side portion 222, friction between the first sealing portion 212a and the first insulating sheet 101 during movement can be reduced, facilitating movement and protecting the first sealing portion 212a, and reducing the risk that the use of the battery module 100 is affected by damage to the first sealing portion 212a.

In some embodiments, the first support 22a includes a first portion 221, and the first portion 221 covers at least a part of the first sealing connection portion 2121, enhancing the protection for the first sealing portion 212a.

In some embodiments, along the third direction Z, one end of the first portion 221 is connected to one of the two first side portion 222, and another end is connected to the other of the two first side portion 222, which can enhance the structural strength of the first support 22a and facilitate the protection for the first sealing portion 212a.

In some embodiments, the first support 22a includes at least one first side extension portion 224, the first side extension portion 224 covers a part of the main body portion 211, and the first side extension portion 224 can protect the main body portion 211, thereby enhancing the connection strength between the first support 22a and the battery cell 21.

In some embodiments, the first support 22a includes at least one first side extension portion 224, the first side extension portion 224 covers a part of the main body portion 211 and one second sealing portion 212b, and the first side extension portion 224 and the second sealing portion 212b are located on the same side of the main body portion 211. The first side extension portion 224 can protect the main body portion 211 and the second sealing portion 212b, and can enhance the connection strength between the first support 22a and the battery cell 21.

In some embodiments, the first support 22a includes two first side extension portions 224, and the two first side extension portions 224 are arranged along the third direction Z. One of the two first side extension portion 224 covers a part of the main body portion 211 and one second sealing portion 212b, and this first side extension portion 224 and this second sealing portion 212b are located on the same side of the main body portion 211. The other of the two first side extension portion 224 covers a part of the main body portion 211 and another second sealing portion 212b, and this first side extension portion 224 and this second sealing portion 212b are located on the same side of the main body portion 211. The first side extension portion 224 can protect the main body portion 211 and the second sealing portion 212b, and can enhance the connection strength between the first support 22a and the battery cell 21.

In some embodiments, the first side extension portion 224 is connected to the first bottom wall 14, and the first side extension portion 224 is configured in a manner that when the battery cell 21 swells, the first side extension portion 224 moves relative to the first bottom wall 14 along the direction opposite to the first direction X.

In some embodiments, the first side extension portion 224 is connected to the first bottom wall 14, and the first side extension portion 224 is configured in a manner that when the swelling of the battery cell 21 is alleviated, the first side extension portion 224 moves relative to the first bottom wall 14 along the first direction X.

In some embodiments, the first side extension portion 224 is connected to the first insulating sheet 101, and the first side extension portion 224 is configured in a manner that when the battery cell 21 swells, the first side extension portion 224 moves on the first insulating sheet 101 along the direction opposite to the first direction X. For example, the first side extension portion 224 is in direct contact with the first insulating sheet 101.

In some embodiments, the first side extension portion 224 is connected to the first insulating sheet 101, and the first side extension portion 224 is configured in a manner that when the swelling of the battery cell 21 is alleviated, the first side extension portion 224 moves on the first insulating sheet 101 along the first direction X. For example, the first side extension portion 224 in direct contact with the first insulating sheet 101.

When the battery cell 21 swells, the main body portion 211 can move on the first insulating sheet 101 through the first side extension portion 224, and through the first side extension portion 224, friction between the main body portion 211 and the first insulating sheet 101 during movement can be reduced, facilitating movement and protecting the main body portion 211, and reducing the risk that the use of the battery module 100 is affected by damage to the main body portion 211.

In some embodiments, the first side extension portion 224 extends from the first side portion 222, which helps to enhance the connection strength between the first side extension portion 224 and the first side portion 222.

In some embodiments, the main body portion 211 includes a first wall 211c, and the first sealing portion 212a is connected to the first wall 211c.

In some embodiments, the first support 22a includes a second portion 226, and the second portion 226 covers a part of the first wall 211c, protecting the main body portion 211. One end of the first portion 221 is connected to one first side portion 222, and another end is connected to another first side portion 222. One end of the second portion 226 is connected to one first side portion 222, and another end is connected to another first side portion 222, which can further enhance the structural strength of the first support 22a, thereby further facilitating the protection for the first sealing portion 212a.

In some embodiments, the first support 22a includes two second portions 226 and two first walls 211c.

In some embodiments, the first support 22a includes a protrusion 227, and along the direction opposite to the second direction Y, the protrusion 227 protrudes from the first portion 221.

In some embodiments, the battery module 100 includes a detection member (not shown in the figures), an accommodating groove 227a is provided on a side of the protrusion 227 away from the electrode terminal 21c, and the detection member is accommodated in the accommodating groove 227a. The detection member is configured to detect a temperature of the battery cell 21. Optionally, the detection member is configured to detect a temperature of the electrode terminal 21c, which helps to improve temperature detection accuracy for the battery cell 21.

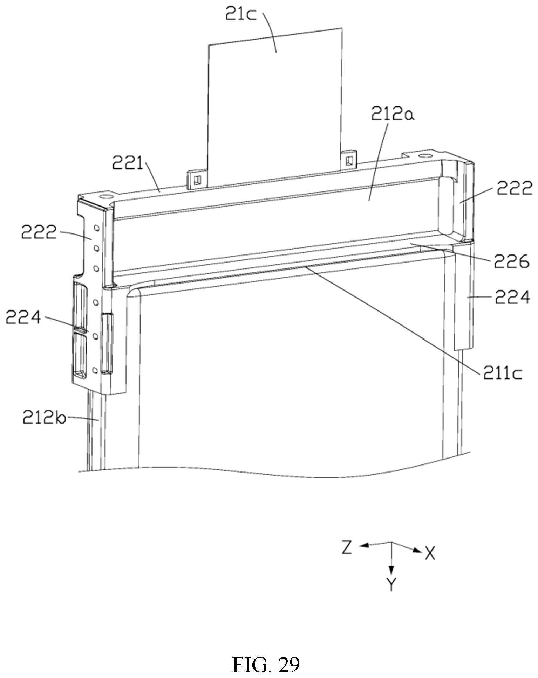

Referring to FIG. 29, when viewed along the direction opposite to the first direction X, the electrode terminal 21c is not shielded by the protrusion 227. In some embodiments, the main body portion 211 includes two second walls 211d, and the two second walls 211d are arranged along the first direction X. The first wall 211c connects the second wall 211d and the first sealing portion 212a.

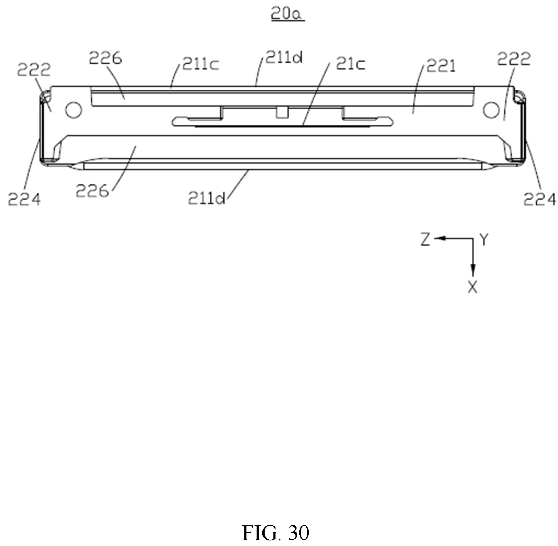

In some embodiments, referring to FIG. 30, when viewed along the second direction Y, in the first direction X, the second portion 226 does not extend beyond the second wall 211d, and the main body portions 211 of adjacent battery cells 21 may be in contact connection, and adjacent battery cells 21 apply pressure to each other through the main body portions 211.

In some embodiments, referring to FIG. 30, when viewed along the second direction Y, in the first direction X, the second portion 226 is disposed between the two second walls 211d, and when the main body portions 211 of adjacent battery cells 21 apply pressure to each other, a force applied to the first sealing portion 212a can be reduced, enhancing the protection for the first sealing portion 212a.

In some embodiments, referring to FIG. 30, when viewed along the second direction Y, in the first direction X, the first side portion 222 is disposed between the two second walls 211d, and when the main body portions 211 of adjacent battery cells 21 apply pressure to each other, a force applied to the first sealing portion 212a can be reduced, enhancing the protection for the first sealing portion 212a.

In some embodiments, referring to FIG. 30, when viewed along the second direction Y, in the first direction X, the first side extension portion 224 is disposed between the two second walls 211d, and when the main body portions 211 of adjacent battery cells 21 apply pressure to each other, a force applied to the main body portions 211 and the second sealing portion 212b can be reduced, enhancing the protection for the main body portions 211 and the second sealing portion 212b.

In some embodiments, the support 22 includes a second support 22b, and the second support 22b is connected to another first sealing portion 212a.

In some embodiments, the first support 22a and the second support 22b have the same structure.

In some embodiments, the first support 22a and the second support 22b are similar, so repeated description of structures identical or similar to the first support 22a in the foregoing embodiments are omitted, and the following focuses on structures different from those in the foregoing embodiments.

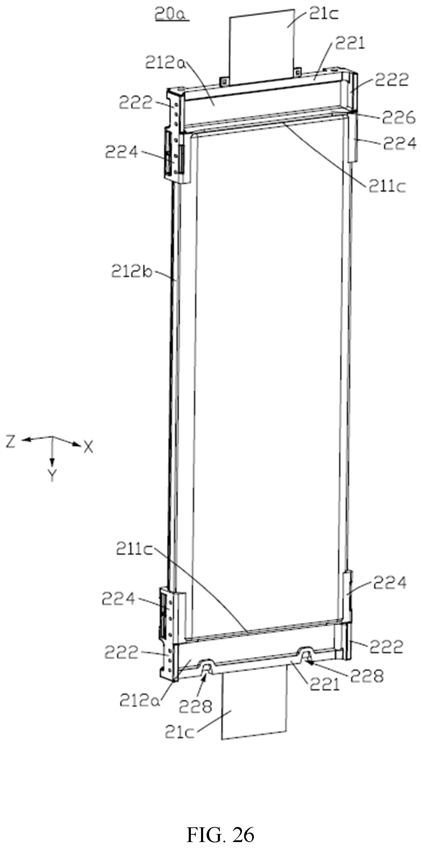

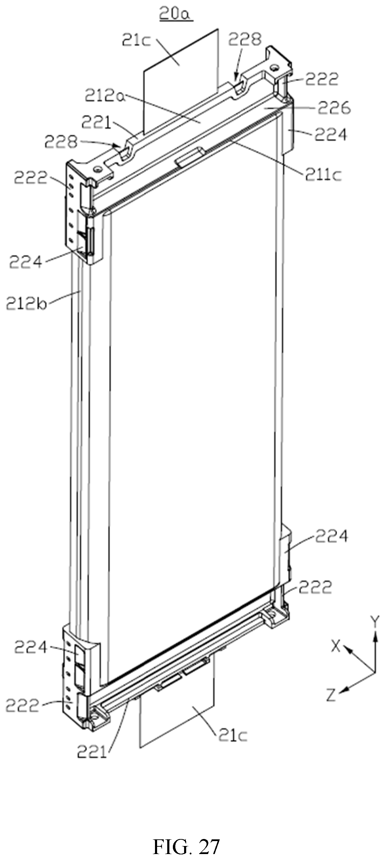

Referring to FIGs. 26 and 27, in some embodiments, the second support 22b is provided with a notch 228, a part of the first sealing connection portion 2121 of another first sealing portion 212a is located in the notch 228, and when the battery cell 21 swells, pressure inside the battery cell 21 can be transferred outside through the first sealing connection portion 2121 in the notch 228, which further facilitates pressure relief and improves the safety of the battery cell unit 20a.

In some embodiments, the notch 228 and the detection member are disposed on different supports, reducing the risk of damage to the detection member during pressure relief.

In some embodiments, the first support 22a may be provided with the notch 228 as shown in the second support 22b.

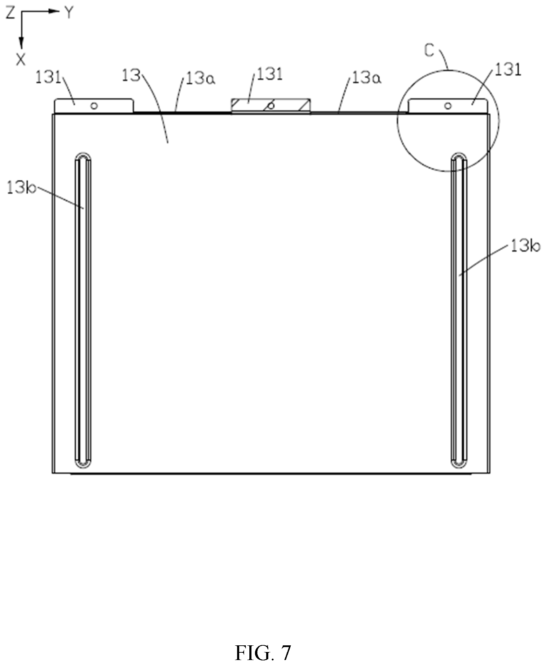

Referring to FIG. 27, in some embodiments, the second support 22b is not provided with the protrusion 227 as shown in FIG. 7.

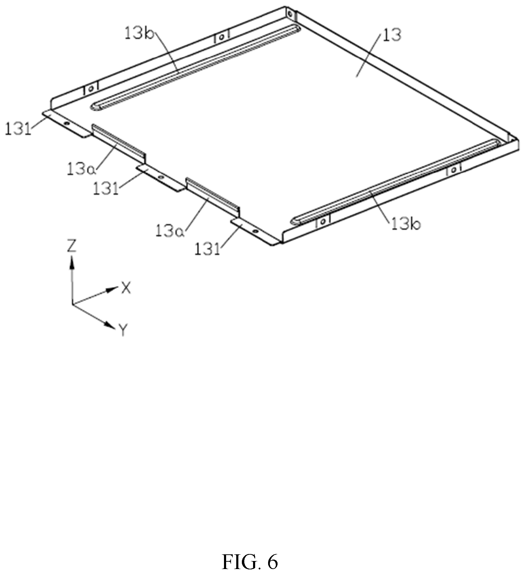

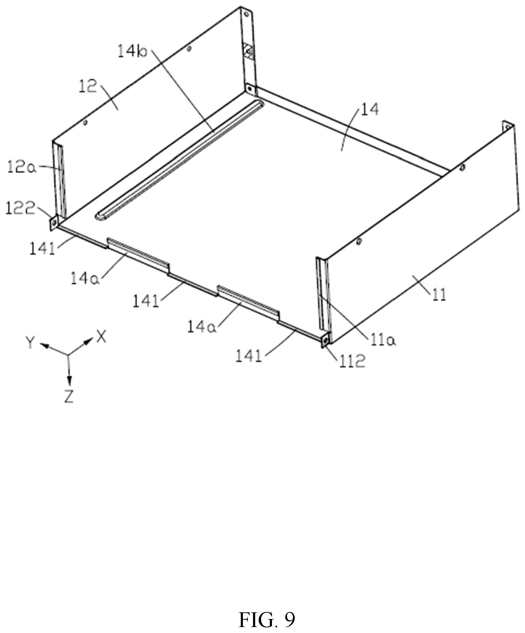

Referring to FIGs. 6 and 9, in some embodiments, the first top wall 13 is provided with two first limiting members 13b, the two first limiting members 13b are spaced apart from each other along the second direction Y, and each first limiting member 13b extends along the first direction X. A part of the battery cell assembly 20 is disposed between the two first limiting members 13b, and the two first limiting members 13b further guide the movement of the battery cell assembly 20. Optionally, the two first limiting members 13b guide the movement of the battery cell assembly 20 in the direction opposite to the first direction X. Optionally, the first limiting member 13b is formed by the first top wall 13 protruding toward the first bottom wall 14.

In some embodiments, the main body portion of each battery cell unit 20a is disposed between the two first limiting members 13b.

Referring to FIGs. 6 and 9, in some embodiments, the first bottom wall 14 is provided with two second limiting members 14b, the two second limiting members 14b are spaced apart from each other along the second direction Y, and each second limiting member 14b extends along the first direction X. A part of the battery cell assembly 20 is disposed between the two second limiting members 14b, and the two second limiting members 14b guide the movement of the battery cell assembly 20. Optionally, the two second limiting members 14b guide the movement of the battery cell assembly 20 in the direction opposite to the first direction X. Optionally, the second limiting member 14b is formed by the first bottom wall 14 protruding toward the first top wall 13.

In some embodiments, the main body portion of each battery cell unit 20a is disposed between the two second limiting members 14b.

In some embodiments, the first top wall 13 is provided with two first limiting members 13b, and the first bottom wall 14 is provided with two second limiting members 14b.

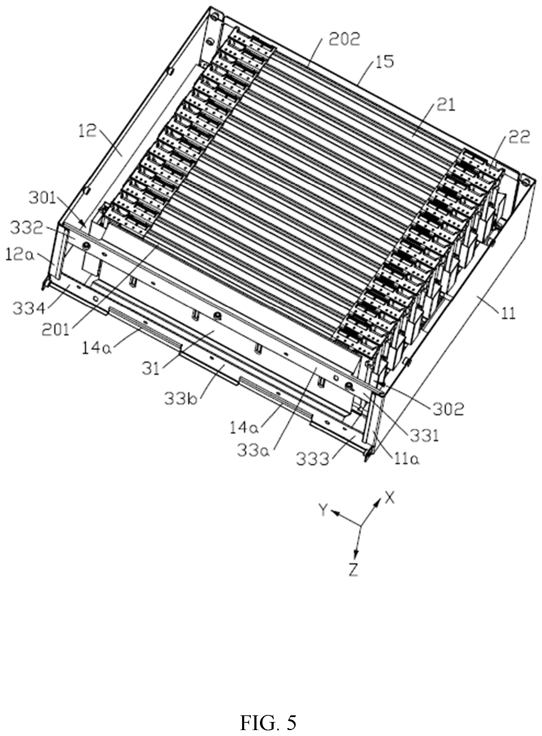

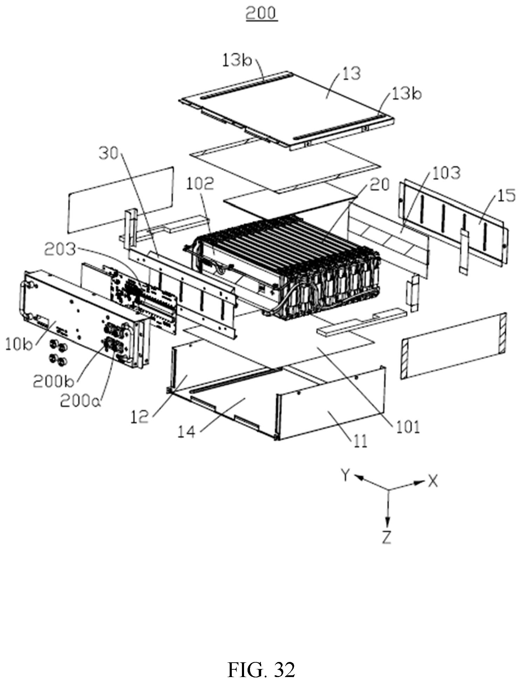

Referring to FIGs. 5 and 32, in some embodiments, along the first direction X, the battery cell assembly 20 is disposed between the base portion 31 and the rear wall 15, the rear wall 15 is connected to the battery cell assembly 20, and the base portion 31 is connected to the battery cell assembly 20. The base portion 31 is configured to apply pressure to the battery cell assembly 20.

In some embodiments, the base portion 31 is connected to the first battery cell unit 201. Optionally, the base portion 31 in direct contact with the first battery cell unit 201. Optionally, the base portion 31 and the first battery cell unit 201 can be connected by other components.

In some embodiments, the battery module 100 includes a first buffer member 102, and the first buffer member 102 is disposed between the base portion 31 and the first battery cell unit 201. Optionally, the first buffer member 102 includes foam.

In some embodiments, a hardness of the first buffer member 102 is less than a hardness of the base portion 31, reducing damage to the first battery cell unit 201 by the base portion 31.

In some embodiments, the rear wall 15 is connected to the second battery cell unit 202.

In some embodiments, the battery module 100 includes a second buffer member 103, and the second buffer member 103 is disposed between the second battery cell unit 202 and the rear wall 15. Optionally, the second buffer member 103 includes foam.

In some embodiments, a hardness of the second buffer member 103 is less than a hardness of the rear wall 15, reducing damage to the second battery cell unit 202 by the rear wall 15.

In some embodiments, a material of the foam includes ethylene-vinyl acetate copolymer (EVA).

In some embodiments, along the first direction X, a projection of the main body portion 211 is located within a projection of the base portion 31, which can increase an acting area between the base portion 31 and the main body portion 211, and is beneficial for the base portion 31 to apply pressure to the main body portion 211.

Referring to FIGs. 5 and 22, in some embodiments, the battery module 100 includes a first conductive member 40. Along the second direction Y, a first gap 301 is between the base portion 31 and the housing 10, one end of the first conductive member 40 is connected to the battery cell assembly 20, and another end passes through the first gap 301.

In some embodiments, along the second direction Y, a first gap 301 is between the base portion 31 and the second side wall 12.

In some embodiments, one end of the first conductive member 40 is connected to the first battery cell unit 201.

In some embodiments, the first conductive member 40 is fixed to the elastic member 30.

In some embodiments, the first conductive member 40 is configured to be movable with the elastic member 30, and under working conditions such as swelling, vibration, and drop of the battery cell unit, the first conductive member 40 moves with the elastic member 30, so that pulling on the first conductive member 40 can be reduced, reducing the risk of the first conductive member 40 being pulled apart, thereby improving the safety of the battery module 100. Optionally, the first conductive member 40 includes a wire harness.

In some embodiments, the first conductive member 40 is configured to transmit power of the battery cell assembly 20. The first conductive member 40 can transmit the power of the battery cell assembly 20. During discharging of the battery module 100, electrical energy of the battery cell assembly 20 can be transmitted to a load of an electric device through the first conductive member 40, to supply power to the load of the electric device. During charging of the battery module 100, external electrical energy can be transmitted to the battery cell assembly 20 through the first conductive member 40, to charge the battery cell assembly 20.

In some embodiments, the battery module 100 includes a second conductive member 50, a second gap 302 is between the base portion 31 and the housing 10, one end of the second conductive member 50 is connected to the battery cell assembly 20, and another end passes through the second gap 302.

In some embodiments, a second gap 302 is between the base portion 31 and the first side wall 11.

In some embodiments, one end of the second conductive member 50 is connected to the second battery cell unit 202.

In some embodiments, the second conductive member 50 and the elastic member 30 are separately disposed, and under working conditions such as swelling, vibration, and drop of the battery cell unit 20a, the second conductive member 50 and the elastic member 30 are separately disposed, which helps to reduce pulling on the second conductive member 50, reducing the risk of the second conductive member 50 being pulled apart, thereby improving the safety of the battery module 100. Optionally, the second conductive member 50 includes a wire harness.

In some embodiments, the second conductive member 50 is configured to transmit the power of the battery cell assembly 20. The second conductive member 50 can transmit the power of the battery cell assembly 20. During discharging of the battery module 100, electrical energy of the battery cell assembly 20 can be transmitted to a load of an electric device through the second conductive member 50, to supply power to the load of the electric device. During charging of the battery module, external electrical energy can be transmitted to the battery cell assembly 20 through the second conductive member 50, to charge the battery cell assembly 20.

In some embodiments, one of the first conductive member 40 and the second conductive member 50 is connected to a main positive electrode terminal of the battery cell assembly 20, and the other is connected to a main negative electrode terminal of the battery cell assembly 20.

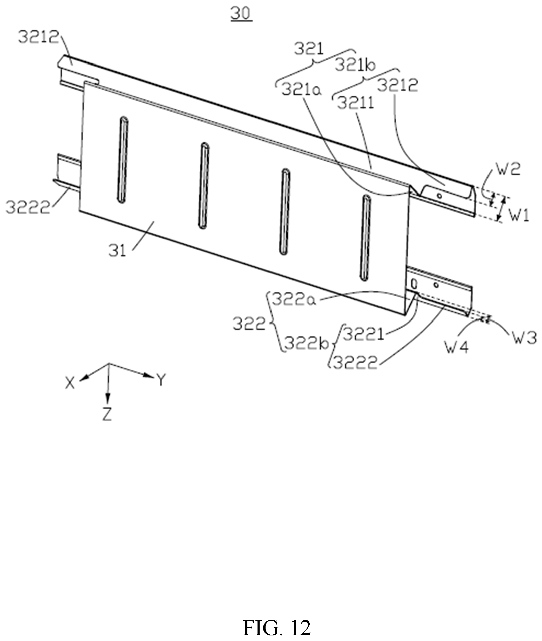

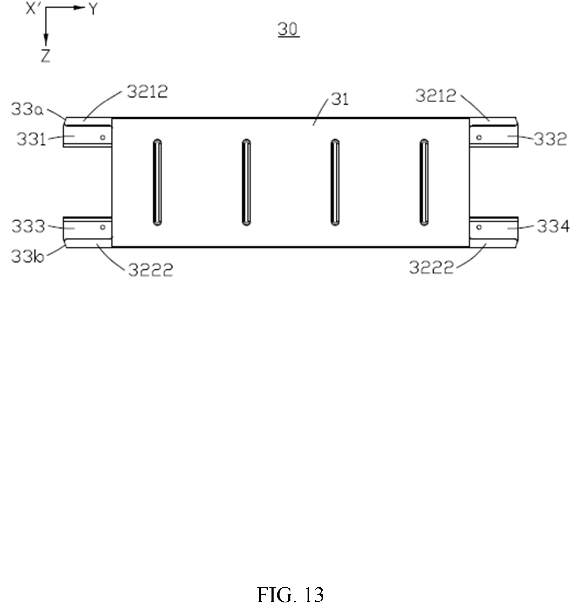

Referring to FIGs. 12 to 19, in some embodiments, in the second direction Y, the connection portion 33 includes a first extension portion 331 extending beyond the base portion 31, and when the housing 10 is subjected to a force, through the first extension portion 331, the connection portion 33 can buffer the force, further reducing the impact on the battery cell assembly 20, thereby further helping to enhance the protection for the battery cell assembly 20. Optionally, along the second direction Y, the first extension portion 331 extends beyond the base portion 31. Optionally, along the direction opposite to the second direction Y, the first extension portion 331 extends beyond the base portion 31.

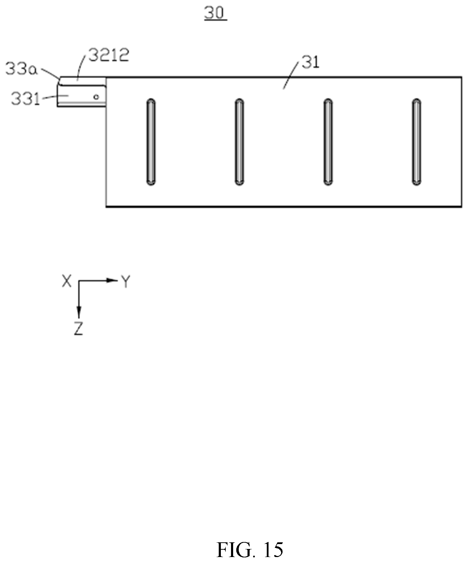

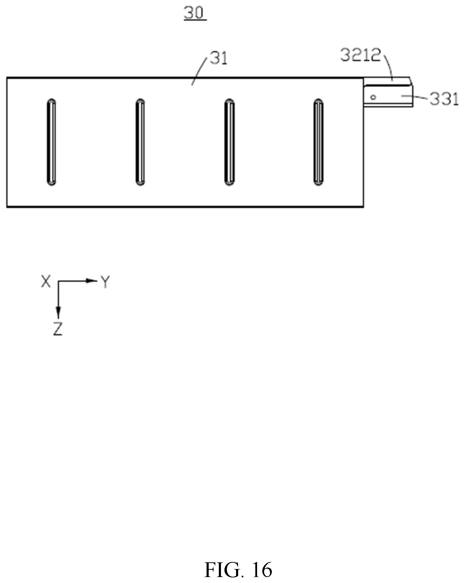

In some embodiments, the connection portion 33 includes a first connection portion 33a, and the first connection portion 33a is fixed to the housing 10. As shown in FIGs. 15 and 16, the first extension portion 331 is connected to the first connection portion 33a.

In some embodiments, the connection portion 33 includes a second connection portion 33b, and the first connection portion 33a and the second connection portion 33b are disposed opposite to each otheralong the third direction Z. The first direction X, the second direction Y, and the third direction are perpendicular to each other.

In some embodiments, the second connection portion 33b is fixed to the housing 10.

In some embodiments, along the third direction Z, the first connection portion 33a is connected to one side of the buffer portion 32, the second connection portion 33b is connected to another side of the buffer portion 32, and the second connection portion 33b is fixed to the housing 10.

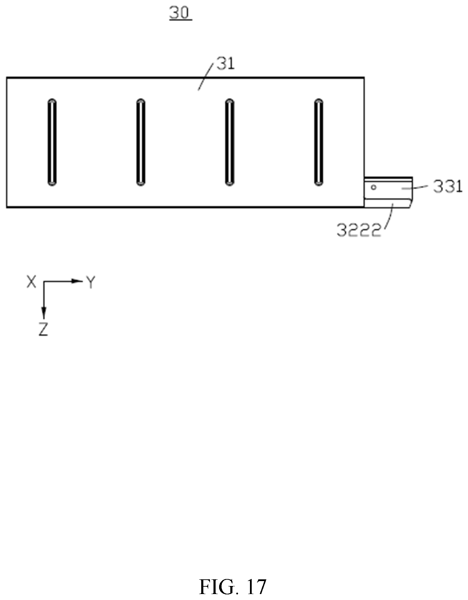

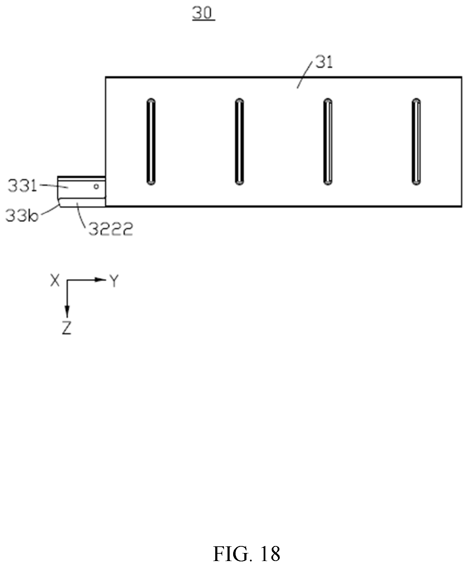

In some embodiments, as shown in FIGs. 17 and 18, the first extension portion 331 is connected to the second connection portion 33b. Optionally, along the second direction Y, the first extension portion 331 extends beyond the base portion 31. Optionally, along the direction opposite to the second direction Y, the first extension portion 331 extends beyond the base portion 31.

Referring to FIGs. 2 to 4 and FIGs. 12 to 19, in some embodiments, the housing 10 includes a first fixing portion 11a, and the first fixing portion 11a is disposed on at least one of the first side wall 11, the second side wall 12, the first bottom wall 14, and the first top wall 13.

In some embodiments, the first fixing portion 11a is disposed on the first side wall 11, and the first fixing portion 11a is fixed to the first side wall 11. Optionally, the first fixing portion 11a is integrally formed with the first side wall 11.

In some embodiments, the first fixing portion 11a is connected to the first side wall 11. Optionally, the first fixing portion 11a is welded to the first side wall 11. Optionally, the first fixing portion 11a and the first side wall 11 are connected by a fastener such as a screw.

In some embodiments, the housing 10 includes a second fixing portion 12a, and the second fixing portion 12a is disposed on at least one of the first side wall 11, the second side wall 12, the first bottom wall 14, and the first top wall 13.

In some embodiments, the second fixing portion 12a is disposed on the second side wall 12, and the second fixing portion 12a is fixed to the second side wall 12. Optionally, the second fixing portion 12a is integrally formed with the second side wall 12.

In some embodiments, the second fixing portion 12a is connected to the second side wall 12. Optionally, the second fixing portion 12a is welded to the second side wall 12. Optionally, the second fixing portion 12a and the second side wall 12 are connected by a fastener such as a screw.

In some embodiments, the first fixing portion 11a is disposed on the first bottom wall 14, and the first fixing portion 11a is fixed to the first bottom wall 14. Optionally, the first fixing portion 11a is integrally formed with the first bottom wall 14.

In some embodiments, the first fixing portion 11a is connected to the first bottom wall 14. Optionally, the first fixing portion 11a is welded to the first bottom wall 14. Optionally, the first fixing portion 11a and the first bottom wall 14 are connected by a fastener such as a screw.

In some embodiments, the second fixing portion 12a is disposed on the first top wall 13, and the second fixing portion 12a is fixed to the first top wall 13. Optionally, the second fixing portion 12a is integrally formed with the first top wall 13.

In some embodiments, the second fixing portion 12a is connected to the first top wall 13. Optionally, the second fixing portion 12a is welded to the first top wall 13. Optionally, the second fixing portion 12a and the first top wall 13 are connected by a fastener such as a screw.

In some embodiments, in the second direction Y, the connection portion 33 includes a second extension portion 332 extending beyond the base portion 31, and the second extension portion 332 is connected to the second fixing portion 12a.

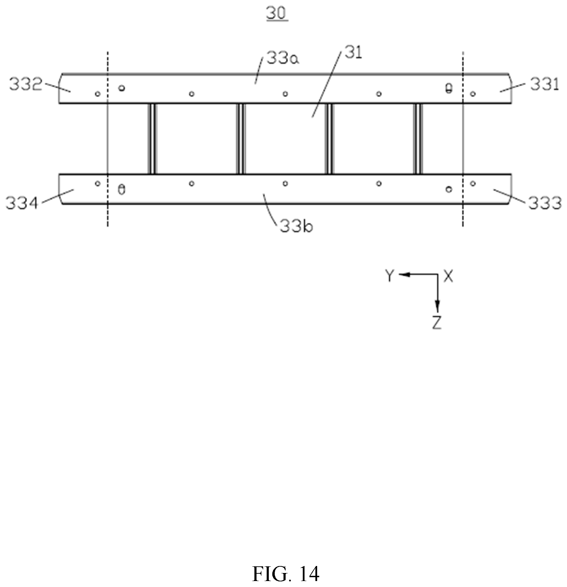

In some embodiments, referring to FIG. 14, when viewed along the first direction X, in the second direction Y, the first extension portion 331 and the second extension portion 332 are respectively located on two sides of the base portion 31.

In some embodiments, the first connection portion 33a connects the first extension portion 331 and the second extension portion 332.

In some embodiments, the second connection portion 33b connects the first extension portion 331 and the second extension portion 332.

In some embodiments, the first extension portion 331 is fixed to the first fixing portion 11a.

In some embodiments, the second extension portion 332 is fixed to the second fixing portion 12a.

In some embodiments, fixing includes but is not limited to abutting, bonding, welding, fastening of a fastener, and snap connection.

In some embodiments, the first extension portion 331 is fixed to the first fixing portion 11a, and the second extension portion 332 is fixed to the second fixing portion 12a.

In some embodiments, along the first direction X, a part of a projection of the first extension portion 331 is spaced apart from a projection of the first fixing portion 11a, which facilitates deformation of the first extension portion 331.

In some embodiments, along the first direction X, a part of the projection of the first extension portion 331 is spaced apart from a projection of the second fixing portion 12a, which facilitates deformation of the first extension portion 331.

In some embodiments, along the first direction X, a part of a projection of the second extension portion 332 is spaced apart from the projection of the first fixing portion 11a, which facilitates deformation of the second extension portion 332.

In some embodiments, along the first direction X, a part of the projection of the second extension portion 332 is spaced apart from the projection of the second fixing portion 12a, which facilitates deformation of the second extension portion 332.

In some embodiments, along the first direction X, a part of the projection of the first extension portion 331 is spaced apart from the projection of the first fixing portion 11a, and a part of the projection of the second extension portion 332 is spaced apart from the projection of the second fixing portion 12a.

In some embodiments, along the first direction X, the projection of the first extension portion 331 is spaced apart from the projection of the main body portion 211, which facilitates deformation of the first extension portion 331.

In some embodiments, along the first direction X, the projection of the second extension portion 332 is spaced apart from the projection of the main body portion 211, which facilitates deformation of the second extension portion 332.

In some embodiments, along the first direction X, the projection of the first extension portion 331 is spaced apart from the projection of the main body portion 211, and the projection of the second extension portion 332 is spaced apart from the projection of the main body portion 211.

In some embodiments, the first extension portion 331 and the second extension portion 332 are configured to bend toward the battery cell assembly 20 along the first direction X. When the battery cell assembly 20 swells, after the buffer portion 32 is compressed to the limit, bending of the first extension portion 331 and the second extension portion 332 helps to further provide swelling space for the battery cell assembly 20, reducing influence on the battery cell assembly 20.

In some embodiments, the connection portion 33 includes a third extension portion 333, and along the direction opposite to the second direction Y, the third extension portion 333 extends beyond the base portion 31.

In some embodiments, the third extension portion 333 is fixed to the first fixing portion 11a. Optionally, along the direction opposite to the first direction X, the third extension portion 333 abuts against the first fixing portion 11a.

In some embodiments, along the first direction X, a part of a projection of the third extension portion 333 is spaced apart from the projection of the first fixing portion 11a, which facilitates deformation of the third extension portion 333.

In some embodiments, the connection portion 33 includes a fourth extension portion 334, and along the second direction Y, the fourth extension portion 334 extends beyond the base portion 31.

In some embodiments, the fourth extension portion 334 is fixed to the second fixing portion 12a. Optionally, along the direction opposite to the first direction X, the fourth extension portion 334 abuts against the second fixing portion 12a.

In some embodiments, along the first direction X, a part of a projection of the fourth extension portion 334 is spaced apart from the projection of the second fixing portion 12a, which facilitates deformation of the fourth extension portion 334.

In some embodiments, along the first direction X, a part of the projection of the third extension portion 333 is spaced apart from the projection of the first fixing portion 11a, and a part of the projection of the fourth extension portion 334 is spaced apart from the projection of the second fixing portion 12a.

In some embodiments, along the first direction X, the projection of the third extension portion 333 is spaced apart from the projection of the main body portion 211, which facilitates deformation of the third extension portion 333.

In some embodiments, along the first direction X, the projection of the fourth extension portion 334 is spaced apart from the projection of the main body portion 211, which facilitates deformation of the fourth extension portion 334.

In some embodiments, along the first direction X, the third extension portion 333 is fixed to the first fixing portion 11a, and the fourth extension portion 334 is fixed to the second fixing portion 12a.

Referring to FIG. 14, in some embodiments, when viewed along the first direction X, in the second direction Y, the third extension portion 333 and the fourth extension portion 334 are respectively located on two sides of the base portion 31.

In some embodiments, the second connection portion 33b connects the third extension portion 333 and the fourth extension portion 334.

In the second direction Y, the part of the first connection portion 33a extending beyond the base portion 31 is connected to the first fixing portion 11a and the second fixing portion 12a, the part of the second connection portion 33b extending beyond the base portion 31 is connected to the first fixing portion 11a and the second fixing portion 12a,which helps to further provide swelling space for the battery cell assembly 20, and is beneficial for the elastic member 30 to be uniformly stressed and to uniformly deform.

In some embodiments, the first fixing portion 11a extends along the third direction Z, and the first extension portion 331 and the third extension portion 333 both abut against the first fixing portion 11a. In other embodiments, the first fixing portion 11a may be divided into two separated portions along the third direction Z, the first extension portion 331 abuts against one portion, and the third extension portion 333 abuts against the other portion.

In some embodiments, the second fixing portion 12a extends along the third direction Z, and the second extension portion 332 and the fourth extension portion 334 both abut against the second fixing portion 12a. In other embodiments, the second fixing portion 12a may be divided into two separated portions along the third direction Z, the second extension portion 332 abuts against one portion, and the fourth extension portion 334 abuts against the other portion.

In some embodiments, the first top wall 13 is provided with a third fixing portion 13a. Along the first direction X, a projection of the third fixing portion 13a overlaps with a projection of the first connection portion 33a, and the first connection portion 33a is fixed to the third fixing portion 13a, to transfer a force applied to the buffer portion 32 to the housing 10. Optionally, the first connection portion 33a abuts against the third fixing portion 13a.

In some embodiments, the first connection portion 33a is fixed to the first fixing portion 11a, the second fixing portion 12a, and the third fixing portion 13a, to transfer a force applied to the buffer portion 32 to the housing 10.

In some embodiments, the first bottom wall 14 is provided with a fourth fixing portion 14a. Along the first direction X, a projection of the fourth fixing portion 14a overlaps with a projection of the second connection portion 33b, and the second connection portion 33b is fixed to the fourth fixing portion 14a, to transfer a force applied to the buffer portion 32 to the housing 10. Optionally, the second connection portion 33b abuts against the fourth fixing portion 14a.

In some embodiments, the second connection portion 33b is fixed to the first fixing portion 11a, the second fixing portion 12a, and the fourth fixing portion 14a, to transfer a force applied to the buffer portion 32 to the housing 10. This is beneficial for the elastic member 30 to be uniformly stressed and to uniformly deform.

In some embodiments, the third extension portion 333 and the fourth extension portion 334 are configured to bend toward the battery cell assembly 20 along the first direction X. In the second direction Y, the part of the first connection portion 33a extending beyond the base portion 31 is connected to the first fixing portion 11a and the second fixing portion 12a, the part of the second connection portion 33b extending beyond the base portion is connected to the first fixing portion 11a and the second fixing portion 12a,helps to further provide swelling space for the battery cell assembly 20, and is beneficial for the elastic member 30 to be uniformly stressed and to uniformly deform.

In some embodiments, the buffer portion 32 includes a first buffer portion 321, and the first buffer portion 321 connects the base portion 31 and the first connection portion 33a.

In some embodiments, the first buffer portion 321 is configured to provide swelling space for the battery cell 21.

Referring to FIG. 19, in some embodiments, when viewed along the second direction Y, along the third direction Z, the first connection portion 33a extends beyond the first buffer portion 321, which facilitates deformation of the first buffer portion 321.

In some embodiments, the first buffer portion 321 includes a first segment 321a and a second segment 321b, the first segment 321a is connected to the base portion 31, and the second segment 321b connects the first segment 321a and the first connection portion 33a.

In some embodiments, an included angle formed by the first segment 321a and the base portion 31 is A1, and an included angle formed by the second segment 321b and the first connection portion 33a is B1.

In some embodiments, the included angle A1 and the included angle B1 are the same, which is beneficial for the elastic member 30 to be uniformly stressed and to uniformly deform.

In some embodiments, the second segment 321b includes a first sub-segment 3211 and at least one second sub-segment 3212. The first sub-segment 3211 connects the first segment 321a and the first connection portion 33a. The second sub-segment 3212 is connected to the first extension portion 331 and/or the second extension portion 332. In the second direction Y, the second sub-segment 3212 is disposed on one side of the first sub-segment 3211. The second sub-segment 3212 can enhance the strength of the elastic member 30.

In some embodiments, in the second direction Y, the second sub-segment 3212 extends beyond the base portion 31.

In some embodiments, the second segment 321b includes one second sub-segment 3212, and the second sub-segment 3212 is connected to the first extension portion 331.

In some embodiments, the second segment 321b includes one second sub-segment 3212, and the second sub-segment 3212 is connected to the second extension portion 332.

In some embodiments, the second segment 321b includes two second sub-segments 3212, where one second sub-segment 3212 is connected to the first extension portion 331, and the other second sub-segment 3212 is connected to the second extension portion 332.

In some embodiments, a length w2 of the second sub-segment 3212 is less than a length w1 of the first sub-segment 3211. Reducing the length of the second sub-segment 3212 can facilitate bending of the first extension portion 331 and the second extension portion 332 while enhancing the strength of the elastic member 30.

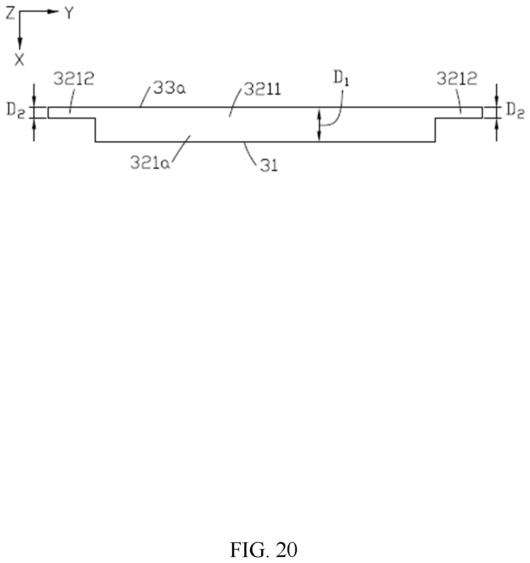

Referring to FIG. 20, in some embodiments, along the third direction Z, a length of a projection of the first sub-segment 3211 in the first direction X is D1, and a length of a projection of the second sub-segment 3212 in the first direction X is D2, where D1 is greater than D2, which helps to provide a pressurization force to the battery cell assembly 20.

In some embodiments, the buffer portion 32 includes a second buffer portion 322, and the second buffer portion 322 connects the base portion 31 and the second connection portion 33b. The second buffer portion 322 is configured to provide swelling space for the battery cell assembly 20.

In some embodiments, the buffer portion 32 includes a first buffer portion 321 and a second buffer portion 322, where the first buffer portion 321 and the second buffer portion 322 are disposed opposite to each other along the third direction Z.

In some embodiments, the second buffer portion 322 includes a third segment 322a and a fourth segment 322b, the third segment 322a is connected to the base portion 31, and the fourth segment 322b connects the third segment 322a and the second connection portion 33b.

In some embodiments, an included angle formed by the third segment 322a and the base portion 31 is A2, and an included angle formed by the fourth segment 322b and the second connection portion 33b is B2.

In some embodiments, the included angle A2 and the included angle B2 are the same, which is beneficial for the elastic member 30 to be uniformly stressed and to uniformly deform.

In some embodiments, the fourth segment 322b includes a third sub-segment 3221 and at least one fourth sub-segment 3222, and the third sub-segment 3221 connects the third segment 322a and the second connection portion 33b. The fourth sub-segment 3222 is connected to the third extension portion 333 and/or the fourth extension portion 334. In the second direction Y, the fourth sub-segment 3222 is disposed on one side of the third sub-segment 3221. The fourth sub-segment 3222 can enhance the strength of the elastic member 30.

In some embodiments, the fourth segment 322b includes one fourth sub-segment 3222, and the fourth sub-segment 3222 is connected to the third extension portion 333.

In some embodiments, the fourth segment 322b includes one fourth sub-segment 3222, and the fourth sub-segment 3222 is connected to the fourth extension portion 334.

In some embodiments, the fourth segment 322b includes two fourth sub-segments 3222, where one of the two fourth sub-segment 3222 is connected to the third extension portion 333, and the other of the two fourth sub-segment 3222 connects the third extension portion 333 and the fourth extension portion 334.

In some embodiments, in the second direction Y, the fourth sub-segment 3222 extends beyond the base portion 31.

Referring to FIG. 12, in some embodiments, a length w4 of the fourth sub-segment 3222 is less than a length w3 of the third sub-segment 3221. Reducing the length of the fourth sub-segment 3222 can facilitate bending of the third extension portion 333 and the fourth extension portion 334 while enhancing the strength of the elastic member 30.

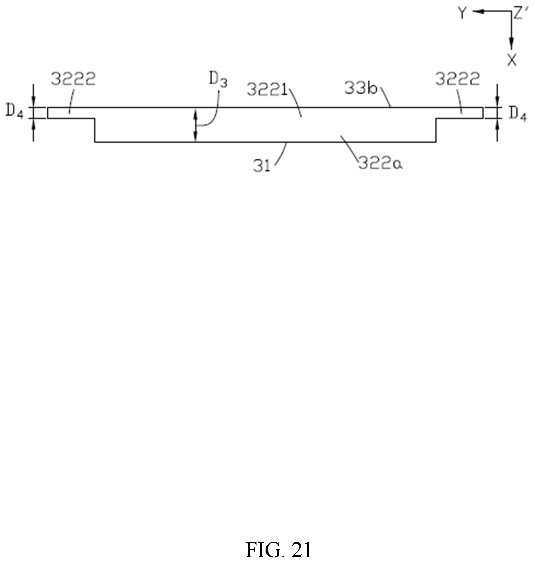

In some embodiments, referring to FIG. 21, along the third direction Z, a length of a projection of the third sub-segment 3221 in the first direction X is D3, and a length of a projection of the fourth sub-segment 3222 in the first direction X is D4, where D3 is greater than D4, which helps to provide a pressurization force to the battery cell assembly 20.

Referring to FIG. 19, in some embodiments, when viewed along the second direction Y, along the direction opposite to the third direction Z, the second connection portion 33b extends beyond the second buffer portion 322, which facilitates deformation of the second buffer portion 322.

In some embodiments, the connection portion 33 is provided with a flange 33c, and the flange 33c is formed by folding the connection portion 33 on one side of the buffer portion 32 in the third direction Z. Along the first direction X, the flange 33c is disposed between the connection portion 33 and the base portion 31. The flange 33c can reduce the risk of the connection portion 33 cutting the first conductive member 40 and the second conductive member 50.

In some embodiments, along the first direction X, a projection of the flange 33c does not overlap with a projection of the buffer portion 32, reducing influence on a deformation region of the buffer portion 32.

Referring to FIG. 20, in some embodiments, the battery module 100 includes a sampling member 60, the sampling member 60 is connected to each battery cell 21, and the sampling member 60 is connected to a circuit board to transmit collected electrical signals of the battery cell 21 to the circuit board. Optionally, the electrode terminals 21c of adjacent battery cells 21 are stacked, and the sampling member 60 is connected to at least one of the stacked electrode terminals 21c. Optionally, the electrical signals include information such as current, voltage, resistance, and temperature. Optionally, the sampling member 60 and the electrode terminal 21c are welded, where the welding includes but is not limited to laser welding and ultrasonic welding.

In some embodiments, the battery module 100 includes a wire 104, and the detection member is connected to the sampling member 60 through the wire 104.

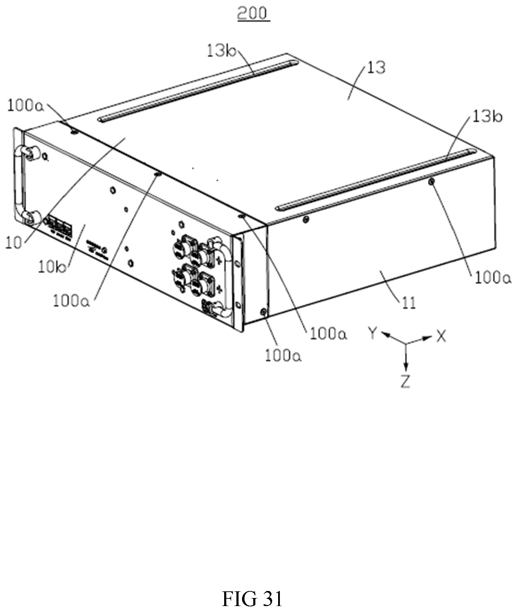

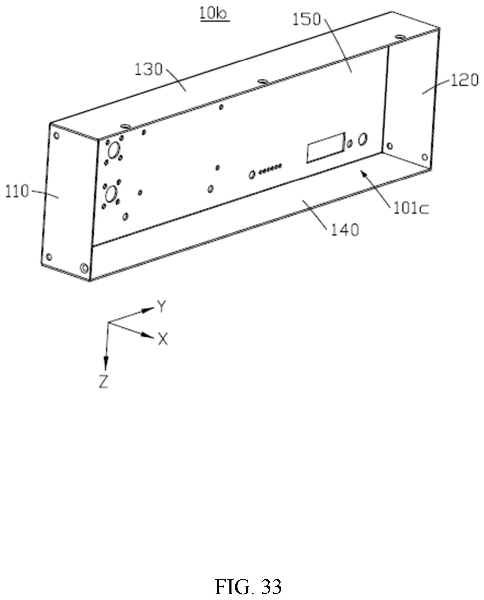

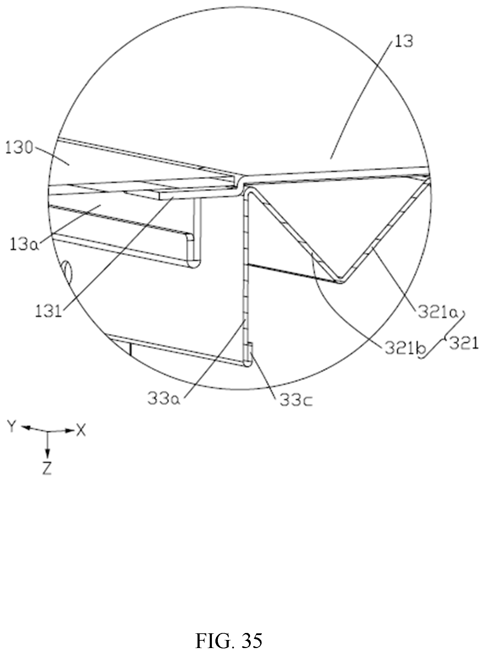

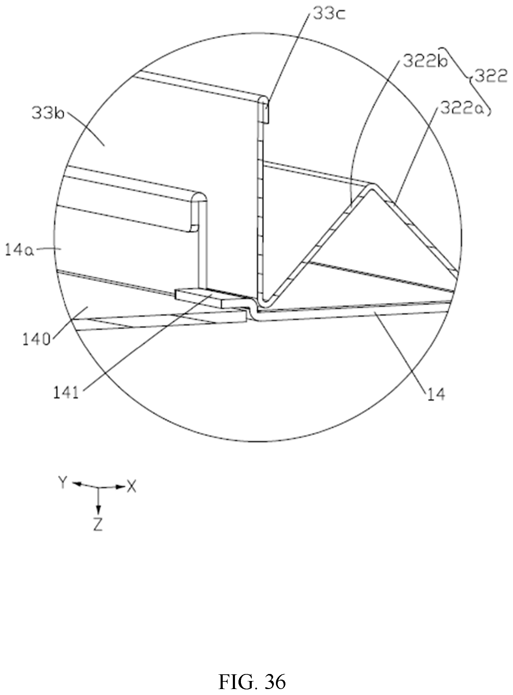

Referring to FIGs. 9 and 31 to 36, an embodiment of the present application provides a battery pack 200, including a front cover 10b and the battery module 100 in any of the above embodiments.

In some embodiments, the front cover 10b is detachably connected to the battery module 100 and closes the first opening 101b, facilitating overhauling of the battery pack 200.

In some embodiments, the front cover 10b is detachably connected to the housing 10, achieving modularization of components disposed in the housing 10 and components disposed in the front cover 10b, thereby facilitating overhauling and replacement of the battery module 100. When the front cover 10b is connected to the housing 10, the front cover 10b closes the first opening 101b.

Optionally, the front cover 10b connects the first side wall 11, the second side wall 12, the first bottom wall 14, and the first top wall 13, and closes the first opening 101b.

In some embodiments, the front cover 10b is separated from the elastic member 30, and along the second direction Y, a projection of the front cover 10b is spaced apart from a projection of the elastic member 30, which helps to reduce the situation of installation difficulties caused by reinstalling the battery cell assembly 20 and the elastic member 30, facilitates overhauling and maintenance, and reduces influence on the continued use of the battery module 100.

In some embodiments, the front cover 10b includes a third side wall 110 and a fourth side wall 120, and the third side wall 110 and the fourth side wall 120 are arranged along the second direction Y. The third side wall 110 is connected to the first side wall 11, and the fourth side wall 120 is connected to the second side wall 12.

In some embodiments, the front cover 10b includes a second top wall 130 and a second bottom wall 140, the second top wall 130 and the second bottom wall 140 are arranged along the third direction Z, the second bottom wall 140 connects the third side wall 110 and the fourth side wall 120, and the second top wall 130 connects the third side wall 110 and the fourth side wall 120. The second top wall 130 is connected to the first top wall 13, and the second bottom wall 140 is connected to the first bottom wall 14.

In some embodiments, the front cover 10b includes a front wall 150, and the front wall 150 connects the third side wall 110, the fourth side wall 120, the second top wall 130, and the second bottom wall 140 to form a second space 101c.

In some embodiments, the battery pack 200 includes a circuit board 203, the circuit board 203 is disposed in the second space 101c, and the circuit board 203 is connected to the battery cell assembly 20. Disposing the circuit board 203 in the second space 101c facilitates overhauling of the circuit board 203 after the housing 10 and the front cover 10b are disassembled. In addition, the battery cell assembly 20 and the elastic member 30 are still disposed in the first space 101a, which helps to reduce the situation of installation difficulties caused by reinstalling the battery cell assembly 20 and the elastic member 30, facilitates overhauling and maintenance, and reduces influence on the continued use of the battery module 100.

Optionally, the circuit board 203 includes a BMS component (Battery Management System), the BMS component includes a plurality of electronic elements, and the plurality of electronic elements can implement functions such as control, protection, communication, power calculation, signal transmission, and electrical energy transmission of the battery cell 21.

Optionally, the circuit board 203 includes a flexible circuit board (FPC, Flexible Printed Circuit). Optionally, the circuit board 203 includes a printed circuit board (PCB, Printed Circuit Board).

In some embodiments, the battery pack 200 includes a first connection end 200a and a second connection end 200b, and the first connection end 200a and the second connection end 200b are connected to the front cover 10b. One of the first connection end 200a and the second connection end 200b is connected to the circuit board 203, and the other is connected to the first conductive member 40. The first connection end 200a and the second connection end 200b protrude from a side of the front cover 10b away from the battery cell assembly 20, for connection to external devices.

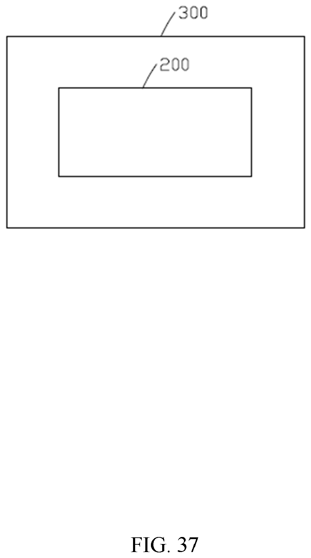

Referring to FIG. 37, the present application further provides an electric device 300 using at least one battery pack 200 in any of the above embodiments. In an embodiment, the electric device 300 of the present application may be, but is not limited to, an electronic device, a drone, a backup power source, an electric vehicle, an electric motorcycle, an electric assisted bicycle, an electric tool, or a household large storage battery module.

Those of ordinary skill in the art should understand that the above embodiments are only used to illustrate the present application, and are not used as limitations to the present application. Appropriate changes and variations made in the above embodiments within the essential spirit of the present application all fall within the scope disclosed by the present application.

## Claims

1. A battery module, comprising:
a housing provided with a first space and a first opening;
a battery cell assembly disposed in the first space; and
an elastic member disposed in the first space, wherein the elastic member and the battery cell assembly are arranged along a first direction; the elastic member comprises a base portion, a buffer portion, and a connection portion; the base portion is connected to the battery cell assembly, the buffer portion connects the connection portion and the base portion, and the elastic member is fixed to the housing;
wherein in a second direction, the connection portion comprises a first extension portion extending beyond the base portion; and the first direction is perpendicular to the second direction.

2. The battery module according to claim 1, wherein the housing is configured to restrict movement of the elastic member along a direction opposite to the first direction.

3. The battery module according to claim 1 or 2, wherein the housing comprises a rear wall; and the elastic member, the battery cell assembly, and the rear wall are arranged along the first direction;
wherein a stiffness of the elastic member is less than a stiffness of the rear wall.

4. The battery module according to any one of claims 1 to 3, wherein the connection portion comprises a first connection portion, and the first connection portion is fixed to the housing; and
the first extension portion is connected to the first connection portion.

5. The battery module according to claim 4, wherein the connection portion comprises a second connection portion, the first connection portion and the second connection portion are arranged along a third direction); and the first direction, the second direction, and the third direction are perpendicular to each other;
wherein the second connection portion is fixed to the housing.

6. The battery module according to claim 5, wherein in the second direction, the connection portion comprises a second extension portion extending beyond the base portion, and the first connection portion connects the first extension portion and the second extension portion;
wherein when viewed along the first direction, in the second direction, the first extension portion and the second extension portion are respectively located on two sides of the base portion.

7. The battery module according to claim 6, wherein the housing comprises a first fixing portion and a second fixing portion;
wherein the first extension portion is fixed to the first fixing portion, and the second extension portion is fixed to the second fixing portion.

8. The battery module according to claim 7, wherein the housing comprises a first side wall and a second side wall arranged along the second direction, the first fixing portion is disposed on the first side wall, and the second fixing portion is disposed on the second side wall.

9. The battery module according to claim 7 or 8, wherein in the second direction, the connection portion comprises a third extension portion and a fourth extension portion extending beyond the base portion, the third extension portion is fixed to the first fixing portion, and the fourth extension portion is fixed to the second fixing portion;
the second connection portion connects the third extension portion and the fourth extension portion.

10. The battery module according to claim 9, wherein along the first direction, a part of a projection of the first extension portion is spaced apart from a projection of the first fixing portion;
and/or a part of a projection of the second extension portion is spaced apart from a projection of the second fixing portion.

11. The battery module according to claim 9, wherein along the first direction, a part of a projection of the third extension portion is spaced apart from a projection of the first fixing portion;
and/or a part of a projection of the fourth extension portion is spaced apart from a projection of the second fixing portion.

12. The battery module according to any one of claims 9 to 11, wherein the buffer portion comprises a first buffer portion, and the first buffer portion connects the first connection portion and the base portion;
wherein the first buffer portion comprises a first segment and a second segment, the first segment is connected to the base portion, the second segment comprises a first sub-segment and at least one second sub-segment, the first sub-segment connects the first segment and the first connection portion, and the second sub-segment connects the first extension portion and/or the second extension portion; and
in the second direction, the second sub-segment is disposed on one side of the first sub-segment.

13. The battery module according to claim 12, wherein when viewed along the second direction, along the third direction, the first connection portion extends beyond the first buffer portion.

14. The battery module according to claim 12 or 13, wherein along the third direction, a length of a projection of the first sub-segment in the first direction is D1, and a length of a projection of the second sub-segment in the first direction is D2, wherein D1 is greater than D2.

15. The battery module according to claim 12 or 13, wherein the buffer portion comprises a second buffer portion, and along the third direction, the first buffer portion and the second buffer portion are oppositely disposed;
wherein the second buffer portion connects the second connection portion and the base portion.

16. The battery module according to claim 15, wherein the second buffer portion comprises a third segment and a fourth segment, the third segment is connected to the base portion, the fourth segment comprises a third sub-segment and at least one fourth sub-segment, the third sub-segment connects the third segment and the second connection portion, and the fourth sub-segment is connected to the third extension portion and/or the fourth extension portion; and
in the second direction, the fourth sub-segment is disposed on one side of the third sub-segment.

17. The battery module according to claim 15 or 16, wherein when viewed along the second direction, along a direction opposite to the third direction, the second connection portion extends beyond the second buffer portion.

18. The battery module according to claim 16 or 17, wherein along a direction opposite to the third direction, a length of a projection of the third sub-segment in the first direction is D3, and a length of a projection of the fourth sub-segment in the first direction is D4, wherein D3 is greater than D4.

19. The battery module according to any one of claims 1 to 18, wherein along the second direction, a first gap is between the base portion and the housing; and
the battery module comprises a first conductive member, the first conductive member is connected to the battery cell assembly, and the first conductive member passes through the first gap.

20. The battery module according to any one of claims 1 to 19, wherein along the second direction, a second gap is between the base portion and the housing; and
the battery module comprises a second conductive member, the second conductive member is connected to the battery cell assembly, and the second conductive member passes through the second gap.

21. The battery module according to claim 8, wherein the housing comprises a first top wall, and the first top wall connects the first side wall and the second side wall;
wherein a third fixing portion is provided on the first top wall, the third fixing portion is fixed to the first connection portion, and along the first direction, a projection of the third fixing portion overlaps with a projection of the first connection portion.

22. The battery module according to claim 21, wherein the housing comprises a first bottom wall, the first top wall and the first bottom wall are arranged along the third direction, and the first bottom wall connects the first side wall and the second side wall;
wherein a fourth fixing portion is provided on the first bottom wall, the fourth fixing portion is fixed to the second connection portion, and along the first direction, a projection of the fourth fixing portion overlaps with a projection of the second connection portion.

23. The battery module according to claim 22, wherein the battery cell assembly comprises a battery cell unit, the battery cell unit comprises a battery cell, the battery cell comprises a battery cell housing, an electrode assembly, and an electrode terminal, the battery cell housing comprises a main body portion, the electrode assembly is disposed at the main body portion, and the electrode terminal is connected to the electrode assembly and extends out of the battery cell housing;
the first top wall is provided with two first limiting portions, and the two first limiting portions are arranged along the second direction;
the main body portion of each battery cell unit is disposed between the two first limiting portions;
and/or the first bottom wall is provided with two second limiting portions, and the two second limiting portions are arranged along the second direction; and
the main body portion of each battery cell unit is disposed between the two second limiting portions.

24. A battery pack, comprising a front cover and the battery module according to any one of claims 1 to 23, wherein the front cover is detachably connected to the battery module and closes the first opening.

25. The battery pack according to claim 24, wherein the front cover is detachably connected to the housing.

26. The battery pack according to claim 24 or 25, wherein along the second direction, a projection of the front cover is spaced apart from a projection of the elastic member.

27. The battery pack according to any one of claims 24 to 26, wherein the front cover is provided with a second space; and
the battery module comprises a circuit board, the circuit board is disposed in the second space, and the circuit board is connected to the battery cell assembly.

28. An electric device, comprising at least one battery pack according to any one of claims 24 to 27.
